(19) Europäisches Patentamt
European Patent Office
Office européen des brevets

(11) **EP 4 668 814 A1**

(12) **EUROPÄISCHE PATENTANMELDUNG**

(43) Veröffentlichungstag:
**24.12.2025  Patentblatt 2025/52**

(21) Anmeldenummer: **24182999.3**

(22) Anmeldetag: **19.06.2024**

(51) Internationale Patentklassifikation (IPC):
***H04W 12/033*** (2021.01)        ***H04W 12/122*** (2021.01)
***H04B 7/06*** (2006.01)

(52) Gemeinsame Patentklassifikation (CPC):
**H04W 12/033; H04B 7/0617; H04W 12/122**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **Deutsche Telekom AG**
  **53113 Bonn (DE)**
• **Technische Universität München**
  **80333 München (DE)**

(72) Erfinder:
• **GEITZ, Marc**
  **58089 Hagen (DE)**
• **MÖNICH, Ullrich**
  **81369 München (DE)**
• **BOCHE, Holger**
  **10318 Berlin (DE)**

(74) Vertreter: **2SPL Patentanwälte PartG mbB**
  **Landaubogen 3**
  **81373 München (DE)**

(54) **VERFAHREN, VORRICHTUNGEN UND COMPUTERPROGRAMME FÜR EINEN SENDER UND EINEN EMPFÄNGER UND ZUR SICHERUNG EINER RICHTFUNKVERBINDUNG, SENDER, EMPFÄNGER, RELAISSTATION, RICHTFUNKSYSTEM**

(57) Die vorliegende Offenbarung betrifft Verfahren, Vorrichtungen und Computerprogramme für einen Sender und einen Empfänger und zur Sicherung einer Richtfunkverbindung, einen Sender, einen Empfänger, eine Relaisstation und ein Richtfunksystem. Das Verfahren (10) für einen Sender (300) und zur Sicherung einer Richtfunkverbindung zwischen dem Sender (300) und einem Empfänger (400) in einem Richtfunksystem (500) umfasst ein Ausrichten (11) eines Richtfunkantennenst- rahls, sodass der Empfänger (400) in einer Hauptabst- rahlrichtung des Antennenstrahls liegt und ein Einfügen (12), auf der physikalischen Schicht, von zusätzlichen Rauschanteilen in eine Nachricht für den Empfänger (400), um eine geschützte Nachricht für den Empfänger (400) zu erhalten. Das Verfahren umfasst darüber hinaus ein Senden (13) der geschützten Nachricht an den Empfänger (400) über den Antennenstrahl.

FIG. 1

EP 4 668 814 A1

## Beschreibung

### Technisches Gebiet

Die vorliegende Offenbarung betrifft Verfahren, Vorrichtungen und Computerprogramme für einen Sender und einen Empfänger und zur Sicherung einer Richtfunkverbindung, einen Sender, einen Empfänger, eine Relaisstation und ein Richtfunksystem, insbesondere aber nicht ausschließlich, ein Konzept zur Absicherung einer Richtfunkstrecke gegen Abhören durch zusätzliches Einfügen von Rauschanteilen auf der physikalischen Schicht.

### Hintergrund

Aus der konventionellen Technik sind verschiedene Richtfunkkonzepte bekannt, die über gerichtete Funkverbindungen Daten von Punkt zu Punkt übertragen. Richtfunk nutzt beispielsweise hochfrequente Mikrowellen zur Übertragung von Daten zwischen zwei festen Standorten. Diese Technologie erfordert eine direkte Sichtverbindung (Line-of-Sight) zwischen den Sende- und Empfangsantennen, was oft durch die Installation von Antennen auf hohen Gebäuden, Türmen oder Hügeln erreicht wird. Aufgrund der hohen Frequenz und schmalen Strahlbreite ermöglicht Richtfunk sehr hohe Datenübertragungsraten über weite Entfernungen. Häufig wird diese Technik in Telekommunikationsnetzen eingesetzt, um Sprach-, Daten- und Videodienste zu übertragen, besonders in abgelegenen oder schwer zugänglichen Gebieten, wo der Ausbau kabelgebundener Netze unwirtschaftlich oder technisch schwierig ist. Durch die relativ einfache Installation und die geringen Betriebskosten ist Richtfunk eine kosteneffiziente Lösung für die schnelle Bereitstellung von Kommunikationsinfrastruktur.

Richtfunk ermöglicht die drahtlose und gerichtete Verbindung von zwei oder mehreren Standorten über Funk. Der wesentliche Unterschied zur herkömmlichen Funkübertragung, z.B. mit einem Funkgerät, ist, dass bei Richtfunk die Übertragung der Funkwellen gerichtet erfolgt. Bei einer gerichteten Übertragung werden die eingesetzten Funkwellen in einem schmalen Band zusammengefasst und in einem gebündelten Strahl gezielt an den anderen Standort gesendet. Durch die Bündelung der Funkwellen lassen sich bei gleicher Sendeleistung höhere Distanzen überbrücken und gleichzeitig mehrere Richtfunkverbindungen im selben Gebiet realisieren, ohne dass diese sich gegenseitig beeinflussen. Typischerweise werden hier Parabolantennen eingesetzt, um eine entsprechende Bündelung und Ausrichtung der Funkwellen zu erreichen.

Um eine Abhörsicherheit zu erreichen, werden beim Richtfunk Verschlüsselungstechniken eingesetzt. Dadurch wird einem potenziellen Abhörer, der das Funksignal einer Richtfunkstrecke empfängt, eine Dekodierung der Daten zu erschwert. Die Kommunikationssicherheit und die Resilienz der Richtfunkstrecke müssen so geplant und realisiert werden, dass sie robust und sicher gegenüber zukünftigen Gefahren sind. So bedrohen Quantencomputer die Sicherheit der aktuell verwendeten asynchronen Kryptographie. Staatliche Akteure und Hackergruppen bedrohen die IT-Sicherheit (Informationstechnik) und die Sicherheit der Kommunikationsnetzwerke. Mit wachsender Digitalisierung werden immer mehr systemrelevante Prozesse in die Welt der digitalen Kommunikationsnetzwerke und der IT verlagert, was die Notwendigkeit nach bestmöglicher Sicherheit in diesen Systemen verlangt.

### Zusammenfassung

Ausführungsbeispiele basieren auf dem Kerngedanken, dass die Abhörsicherheit durch Kombination von Richtfunk und dem Einfügen von zusätzlichen Rauschanteilen auf der physikalischen Schicht einer Richtfunkverbindung erzielt werden kann. Das Einfügen von zusätzlichen Rauschanteilen kann eine Nachricht schützen, sofern die Empfangsqualität beim legitimen Empfänger besser ist als bei einem Abhörer. Die gerichtete Abstrahlung der Energie auf einen engen räumlichen Bereich schränkt die Abhörmöglichkeiten auf diesen engen räumlichen Bereich ein. Wird der räumliche Bereich weit genug eingeschränkt, so müsste ein potenzieller Abhörer der Sichtlinie zwischen Sender und Empfänger sehr nahekommen und gleichzeitig beim Abhören unentdeckt bleiben. Genau das ist bei Richtfunkverbindungen jedoch gut zu überwachen, weil dieser Bereich gut einsehbar ist.

Ausführungsbeispiele schaffen ein Verfahren für einen Sender und zur Sicherung einer Richtfunkverbindung zwischen dem Sender und einem Empfänger in einem Richtfunksystem. Das Verfahren umfasst ein Ausrichten eines Richtfunkantennenstrahls, sodass der Empfänger in einer Hauptabstrahlrichtung des Antennenstrahls liegt. Darüber hinaus umfasst das Verfahren ein Einfügen, auf der physikalischen Schicht, von zusätzlichen Rauschanteilen in eine Nachricht für den Empfänger, um eine geschützte Nachricht für den Empfänger zu erhalten. Das Verfahren umfasst ferner ein Senden der geschützten Nachricht an den Empfänger über den Antennenstrahl. Die zusätzlich eingefügten Rauschanteile schützen die Nachricht vor einem Abhörer, wenn dieser eine schlechtere Empfangsqualität hat, als der legitime Empfänger. Dies ist außerhalb der Richtfunkstrecke der Fall. Das Verwenden der zusätzlich eingefügten Rauschanteile kann für eine Abhörsicherheit sorgen, die ggf. auch quantensicher ist, da auch ein Quantencomputer ein entsprechend verrauschtes und damit informationsloses Signal nicht dekodieren kann.

In weiteren Ausführungsbeispielen kann das Verfahren ein Anpassen einer Übertragungsqualität durch Einstellen eines oder mehrerer Übertragungsparameter für das Senden der geschützten Nachricht und/oder Einstellen einer Vorschrift für das Einfügen der Rauschanteile umfassen. Das kann beispielsweise durch eine Rückmeldung über eine Übertragungsqualität von einem Empfänger and den Sender unterstützt werden. Damit kann ein adaptives oder dynamisches Nachführen der Übertragungsparameter und/oder des Einfügens der Rauschanteile erfolgen. Dies kann basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen auch basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Das Einfügen der zusätzlichen Rauschanteile kann auf einer oder mehreren Zufallszahlen basieren, die dem Sender und dem Empfänger bekannt sind. Die Zufallszahlen können dabei als Eingangswerte für eine Funktion oder Abbildungsvorschrift dienen, die dann eine Vorschrift für das Einfügen der Rauschanteile liefert. Die ein oder mehreren Zufallszahlen können ein gemeinsames Geheimnis des Senders und des Empfängers sein oder die ein oder mehreren Zufallszahlen können auch öffentlich bekannt sein. Ein Abhörer, der Kenntnis der ein oder mehreren Zufallszahlen erlangt, kann die geschützte Nachricht nicht dekodieren, solange er eine schlechtere Empfangsqualität als der legitime Empfänger aufweist. Selbst unter diesen Umständen wäre die Nachricht durch das zusätzlich eingefügte Rauschen nicht dekodierbar.

In manchen Ausführungsbeispielen wird ein Sicherheitscode basierend auf den ein oder mehreren Zufallszahlen erzeugt und das Einfügen der Rauschanteile basiert auf dem Sicherheitscode. Der Sicherheitscode kann dann ggf. auch neu erzeugt werden und auf weiteren Zufallswerten basieren, die beispielsweise nur durch den Sender und den legitimen Empfänger im Funkkanal beobachtbar sind.

In weiteren Ausführungsbeispielen kann ein Überwachen der Richtfunkverbindung auf Signalveränderungen oder Veränderungen im Luftraum der Richtfunkverbindung, die auf einen Abhörversuch hinweisen, erfolgen. Dadurch können Abhörversuche detektiert werden. Es kann dann ein Anpassen des Einfügens von Rauschanteilen erfolgen, wenn Hinweise auf einen Abhörversuch vorliegen. Ergänzend oder alternativ kann ein Anpassen von Übertragungsparametern erfolgen, wenn Hinweise auf einen Abhörversuch vorliegen. Insofern können Ausführungsbeispiele auf einen detektierten Abhörversuch reagieren und ein weiteres Abhören durch die Anpassungen ausschließen oder zumindest erschweren. So kann beispielsweise ein dynamisches Variieren des Einfügens von zusätzlichen Rauschanteilen zum Schutz vor etwaigem Abhören der Richtfunkverbindung und/oder zur Erhöhung der Systemresilienz erfolgen. Dies kann beispielsweise auf geänderte Zufallswerte zurückgehen, die bei einem Abhörer nicht vorliegen. Das dynamische Variieren kann ein dynamisches Verändern eines Anteils der Rauschanteile in der geschützten Nachricht umfassen. So können mal mehr und mal weniger Rauschanteile eingefügt werden bzw. können nach detektiertem Abhörversuch entsprechend mehr Rauschanteile in das Signal eingefügt werden, um eine Dekodierung zu erschweren.

In manchen Ausführungsbeispielen kann ein zusätzliches Verschlüsseln der Nachricht mit einem post-quantum-kryptografischen Verschlüsselungsalgorithmus erfolgen. Dadurch kann die Abhörsicherheit noch weiter erhöht werden. Das Einfügen der zusätzlichen Rauschanteile kann auch wetterabhängig erfolgen, um den durch Wetterveränderungen hervorgerufenen Schwankungen im Funkkanal und damit den Schwankungen der Empfangsqualitäten bei Abhörer und legitimen Empfänger zu begegnen.

Ausführungsbeispiele schaffen auch ein Verfahren für einen Empfänger und zur Sicherung einer Richtfunkverbindung zwischen einem Sender und dem Empfänger in einem Richtfunksystem. Das Verfahren umfasst ein Ausrichten eines Richtfunkantennenstrahls, sodass der Sender in einer Hauptabstrahlrichtung des (Richtfunk-)Antennenstrahls liegt und ein Empfangen einer geschützten Nachricht über den ausgerichteten (Richtfunk-)Antennenstrahl. Das Verfahren umfasst darüber hinaus ein Entfernen, auf der physikalischen Schicht, von zusätzlichen Rauschanteilen aus der geschützten Nachricht, um eine rauschreduzierte Nachricht zu erhalten und ein Dekodieren der rauschreduzierten Nachricht. Anlog zu dem oben für die Senderseite Gesagten können die zusätzlich eingefügten Rauschanteile ein Abhören der Nachricht erschweren bzw. unmöglich machen.

Das Verfahren kann ein Rückmelden einer Information über eine Empfangsqualität an den Sender zum Anpassen einer Übertragungsqualität durch Einstellen eines oder mehrerer Übertragungsparameter für das Senden der geschützten Nachricht und/oder ein Einstellen einer Vorschrift für das Einfügen/Entfernen der Rauschanteile umfassen. So kann auf Schwankungen in der Übertragungsqualität entsprechend reagiert werden. Das Einstellen kann dabei basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

In Anlehnung an die obige Beschreibung kann das Entfernen der zusätzlichen Rauschanteile auf einer oder mehreren Zufallszahlen basieren, die dem Sender und dem Empfänger bekannt sind. Die ein oder mehreren Zufallszahlen können ein gemeinsames Geheimnis des Senders und des Empfängers sein oder öffentlich bekannt sein. In weiteren Ausführungsbeispielen kann das Verfahren ein Erzeugen eines Sicherheitscodes basierend auf den ein oder mehreren Zufallszahlen und ein Entfernen der Rauschanteile basierend auf dem Sicherheitscode beinhalten. Schließlich kann zusätzlich noch ein Entschlüsseln der Nachricht mit einem post-quantum-kryptografischen Verschlüsselungsalgorithmus erfolgen, um die Abhörsicherheit noch weiter zu erhöhen.

Ausführungsbeispiele schaffen auch ein Computerprogramm mit einem Programmcode zur Durchführung eines der hierin beschriebenen Verfahren, wenn der Programmcode auf einem Computer, einem Prozessor oder einer programmierbaren Hardwarekomponente ausgeführt wird.

Ein weiteres Ausführungsbeispiel ist eine Vorrichtung für einen Sender und zur Sicherung einer Richtfunkverbindung zwischen dem Sender und einem Empfänger in einem Richtfunksystem. Die Vorrichtung umfasst ein oder mehrere Schnittstellen, die zur Kommunikation in dem Richtfunksystem ausgebildet sind und ein oder mehrere Signalverarbeitungskomponenten, die ausgebildet sind, um eines der hierin für den Sender beschriebenen Verfahren auszuführen. Ein Sender mit einer solchen Vorrichtung ist ein weiteres Ausführungsbeispiel.

Darüber hinaus schaffen Ausführungsbeispiele auch eine Vorrichtung für einen Empfänger und zur Sicherung einer Richtfunkverbindung zwischen einem Sender und dem Empfänger in einem Richtfunksystem. Die Vorrichtung umfasst ein oder mehrere Schnittstellen, die zur Kommunikation in dem Richtfunksystem ausgebildet sind und ein oder mehrere Signalverarbeitungskomponenten, die ausgebildet sind, um eines der hierin für den Empfänger beschriebenen Verfahren auszuführen. Ein Empfänger mit einer solchen Vorrichtung ist ein weiteres Ausführungsbeispiel.

Ausführungsbeispiele schaffen auch eine Vorrichtung für eine Relaisstation eines Richtfunksystems mit einer Vorrichtung für den Sender und einer Vorrichtung für den Empfänger gemäß der vorliegenden Beschreibung. Die Vorrichtung für die Relaisstation kann ausgebildet sein, um eine empfangene Nachricht von einer ersten Richtfunkstrecke über eine zweite Richtfunkstrecke weiterzuleiten und/oder umgekehrt. Damit können sichere Richtfunkstrecken über mehrere Streckenabschnitte bereitgestellt werden. Die Vorrichtung kann darüber hinaus ausgebildet sein, um in der Nachricht vor dem Weiterleiten vorherige zusätzliche Rauschanteile zu entfernen und neue zusätzliche Rauschanteile einzufügen. Damit können die einzelnen Streckenabschnitte separat abgesichert werden. Alternativ kann die Vorrichtung ausgebildet sein, um die Nachricht weiterzuleiten, ohne die zusätzlichen Rauschanteile in der Nachricht zu verändern. Damit kann eine Absicherung der Gesamtstrecke ermöglicht werden, ohne dass zusätzlicher Umkodierungsaufwand an der Relaisstation entsteht.

Ein Richtfunksystem mit einer Vorrichtung für den Sender und einer Vorrichtung für den Empfänger gemäß der vorliegenden Beschreibung ist ein weiteres Ausführungsbeispiel.

**Figurenkurzbeschreibung**

Einige Beispiele von Vorrichtungen und/oder Verfahren werden nachfolgend bezugnehmend auf die beiliegenden Figuren lediglich beispielhaft näher erläutert. Es zeigen:

Fig. 1 ein Ablaufdiagramm eines Ausführungsbeispiels eines Verfahrens für einen Sender;

Fig. 2 ein Ablaufdiagramm eines Ausführungsbeispiels eines Verfahrens für einen Empfänger;

Fig. 3 Blockdiagramme von Ausführungsbeispielen von Vorrichtungen für einen Sender und einen Empfänger, ein Ausführungsbeispiel eines Senders, ein Ausführungsbeispiel eines Empfängers und ein Ausführungsbeispiel eines Richtfunksystems;

Fig. 4 Beispiele von Richtfunkstrecken;

Fig. 5 eine Richtfunkstrecke in einem Ausführungsbeispiel;

Fig. 6 ein Blockdiagramm einer Absicherung auf der physikalischen Schicht in einem Ausführungsbeispiel;

Fig. 7 eine Richtfunkstrecke in einem weiteren Ausführungsbeispiel;

Fig. 8 eine Darstellung der atmosphärischen Dämpfung von Funkwellen als Funktion der Frequenz;

Fig. 9 eine Darstellung der niederschlagbedingten Dämpfung von Funkwellen als Funktion der Frequenz;

Fig. 10 eine Illustration von verschiedenen Positionen eines Angreifers auf eine Richtfunkstrecke;

Fig. 11 eine Abhörsituation mit einem Satelliten; und

Fig. 12 eine Struktur einer Richtfunkverbindung mit Relaisstation in einem Ausführungsbeispiel.

**Beschreibung**

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

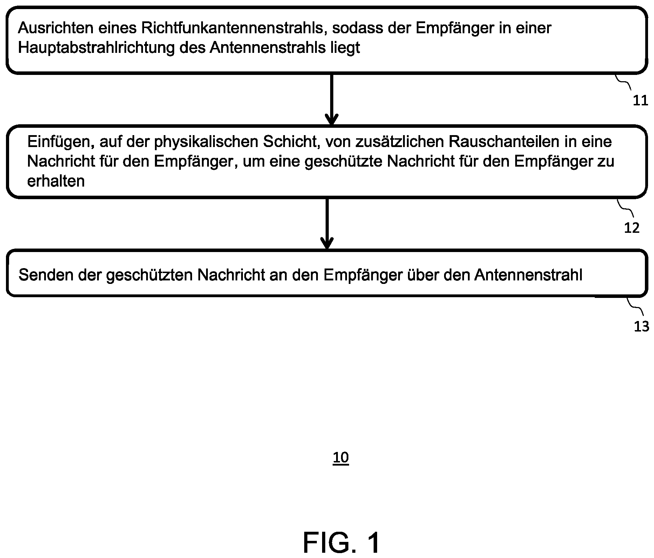

Fig. 1 zeigt ein Ablaufdiagramm eines Ausführungsbeispiels eines Verfahrens 10 für einen Sender. Das Verfahren 10 für den Sender und zur Sicherung einer Richtfunkverbindung zwischen dem Sender und einem Empfänger in einem Richtfunksystem umfasst ein Ausrichten 11 eines Richtfunkantennenstrahls, sodass der Empfänger in einer Hauptabstrahlrichtung des (Richtfunk-)Antennenstrahls liegt. Das Verfahren 10 umfasst ferner ein Einfügen 12, auf der physikalischen Schicht, von zusätzlichen Rauschanteilen in eine Nachricht für den Empfänger, um eine geschützte Nachricht für den Empfänger zu erhalten. Das Verfahren beinhaltet darüber hinaus ein Senden 13 der geschützten Nachricht an den Empfänger über den (Richtfunk-)Antennenstrahl.

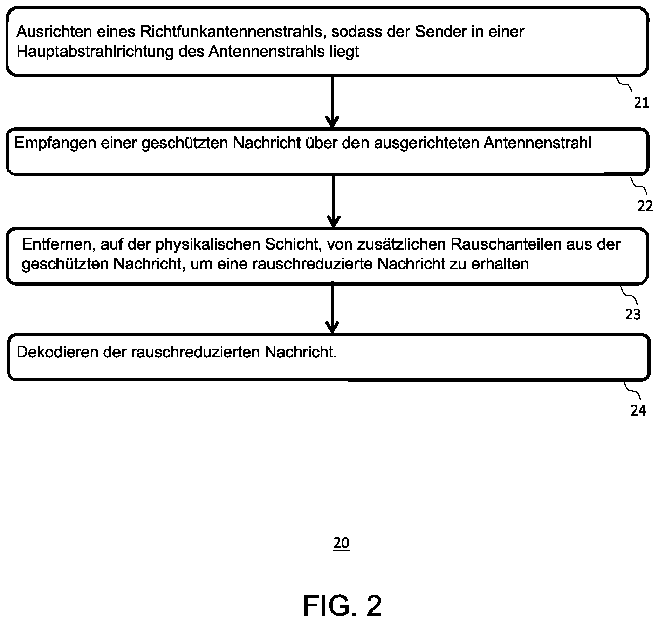

Fig. 2 zeigt ein Ablaufdiagramm eines Ausführungsbeispiels eines Verfahrens 20 für einen Empfänger. Das Verfahren 20 für den Empfänger und zur Sicherung einer Richtfunkverbindung zwischen einem Sender und dem Empfänger in einem Richtfunksystem umfasst ein Ausrichten 21 eines Richtfunkantennenstrahls, sodass der Sender in einer Hauptabstrahlrichtung des (Richtfunk-)Antennenstrahls liegt und ein Empfangen 22 einer geschützten Nachricht über den ausgerichteten (Richtfunk-)Antennenstrahl. Das Verfahren 20 umfasst darüber hinaus ein Entfernen 23, auf der physikalischen Schicht, von zusätzlichen Rauschanteilen aus der geschützten Nachricht, um eine rauschreduzierte Nachricht zu erhalten und ein Dekodieren 24 der rauschreduzierten Nachricht.

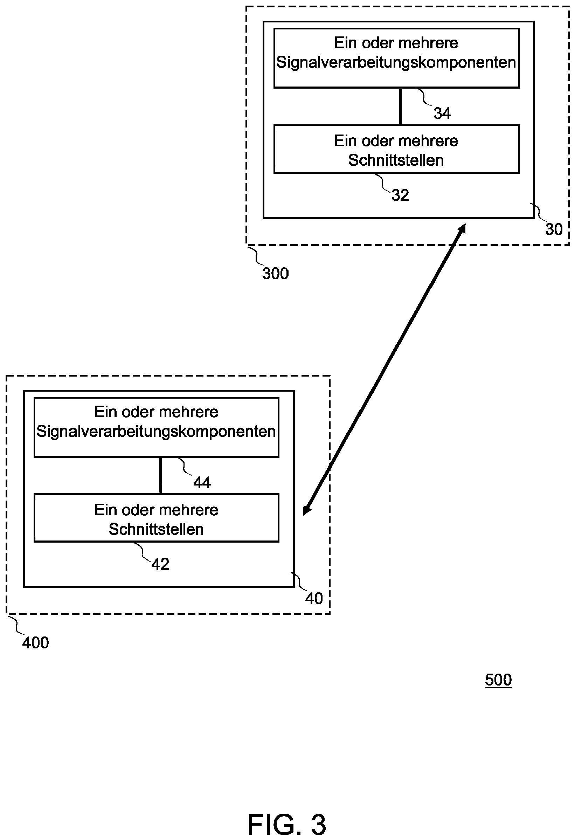

Optionale Komponenten werden im Folgenden mit gestrichelten Linien dargestellt. Fig. 3 zeigt Blockdiagramme von Ausführungsbeispielen von Vorrichtungen 30, 40 für einen Sender 300 und einen Empfänger 400, ein Ausführungsbeispiel eines Senders 300, ein Ausführungsbeispiel eines Empfängers 400 und ein Ausführungsbeispiel eines Richtfunksystems 500.

Die Vorrichtung 30 für den Sender 300 und zur Sicherung einer Richtfunkverbindung zwischen dem Sender 300 und dem Empfänger 400 in dem Richtfunksystem 500 umfasst ein oder mehrere Schnittstellen 32, die zur Kommunikation in dem Richtfunksystem 500 ausgebildet sind. Die ein oder mehreren Schnittstellen sind mit ein oder mehreren Signalverarbeitungskomponenten 34 gekoppelt. Die ein oder mehreren Signalverarbeitungskomponenten sind ausgebildet, um eines der hierin beschriebenen Verfahren 10 für einen Sender auszuführen. Die Fig 3 illustriert darüber hinaus auch ein Ausführungsbeispiel eines Senders 300 (in gestrichelten Linien da optional aus Sicht der Vorrichtung 30) des Richtfunksystems 500 mit einer Vorrichtung 30.

Fig. 3 zeigt auch eine Vorrichtung 40 für den Empfänger 400 und zur Sicherung der Richtfunkverbindung zwischen dem Sender 300 und dem Empfänger 400 in dem Richtfunksystem 500. Die Vorrichtung 40 umfasst ein oder mehreren Schnittstellen 42, die zur Kommunikation in dem Richtfunksystem 500 ausgebildet sind und die mit ein oder mehreren Signalverarbeitungskomponenten 44 gekoppelt sind. Die ein oder mehreren Signalverarbeitungskomponenten 44 sind ausgebildet, um eines der hierin beschriebenen Verfahren für den Empfänger 400 auszuführen. Fig. 3 zeigt auch einen Empfänger 400 (optional aus Sicht der Vorrichtung) für das Richtfunksystem 500 mit einer Vorrichtung 40.

Schließlich ist das in der Fig. 3 gezeigte Richtfunksystem 500 mit der Vorrichtung 30 und der Vorrichtung 40 ein weiteres Ausführungsbeispiel.

Eine Vorrichtung für eine Relaisstation des Richtfunksystems 500 umfasst ebenfalls eine Vorrichtung 30 (für den Sender der Relaisstation) und eine Vorrichtung 40 (für den Empfänger der Relaisstation).

Die für die Vorrichtungen 30, 40 beschriebenen Schnittstellen 32, 42 erlauben eine Kommunikation mit Sender- bzw. Empfängerkomponenten. Die Schnittstellen 32, 42 können somit Anschlüsse, Pins oder Register sein, die einen Austausch von Daten mit den jeweiligen Komponenten erlauben. In dem Richtfunksystem 500 werden elektromagnetische Wellen im Radiofrequenzbereich verwendet, um Daten zwischen zwei oder mehr Punkten (vom Sender zum Empfänger) drahtlos zu übertragen. Dabei können entsprechende Funkstandards zum Einsatz kommen. Insofern können Sender- und Empfängerkomponenten typische Komponenten eines Sendeempfängers für Radiosignale umfassen, wie beispielsweise ein oder mehrere (Parabol-)Antennen, Verstärker, Filter, Signalverarbeitungskomponenten etc. insbesondere auf die Antennentechnik wird im Folgenden noch im Detail eingegangen. Typische weitere Sender- bzw. Empfängerkomponenten sind darüber hinaus ein oder mehrere Mischer, ein oder mehrere Verstärker, ein oder mehrere Diplexer, ein oder mehrere Duplexer, Funkmodem, optische und/oder elektronische Signalverarbeitungskomponenten, usw. In Ausführungsbeispielen können die entsprechenden Signalverarbeitungskomponenten 34, 44 einem beliebigen Controller oder Prozessor oder einer programmierbaren Hardwarekomponente entsprechen. Beispielsweise können Kontrollmodule (Vorrichtungen 30, 40) auch als Software oder Computerprogramm realisiert sein, die oder das für eine entsprechende Hardwarekomponente programmiert ist.

In Ausführungsbeispielen können die ein oder mehreren Signalverarbeitungskomponenten 34, 44 zur digitalen Signalverarbeitung ausgebildet sein. Dabei können sie als eine oder mehrere Verarbeitungseinheiten, ein oder mehrere Verarbeitungsgeräte, ein beliebiges Mittel zur Verarbeitung, ein beliebiges Mittel zur Bestimmung, ein beliebiges Mittel zur Berechnung, wie einem Prozessor, einem Computer oder einer programmierbaren Hardwarekomponente, die mit entsprechend angepasster Software betrieben werden kann, implementiert werden. Beispielsweise können die ein oder mehreren Signalverarbeitungskomponenten auch Speicher umfassen, die entsprechende Information über die Signale zwischenspeichern bzw. Konfigurationsinformation vorhalten. Die beschriebene Funktion der ein oder mehreren Signalverarbeitungskomponenten 34, 44 kann auch in Software implementiert sein, die dann auf einer oder mehreren programmierbaren Hardwarekomponenten ausgeführt wird. Solche Hardwarekomponenten können einen Universalprozessor, einen digitalen Signalprozessor (DSP), einen Mikrocontroller usw. umfassen. Auch solche Signalverarbeitungskomponenten verwendet werden, um die zusätzlichen Rauschanteile auf der physikalischen Schicht einzufügen bzw. zu entfernen.

Das Richtfunksystem 500 kann dabei verschiedene Frequenzbänder nutzen, wie beispielsweise

EHF-Band (Extremely High Frequency): 30-300 GHz,
SHF-Band (Super High Frequency): 3-30 GHz, und
UHF-Band (Ultra High Frequency): 300 MHz - 3 GHz.

ITU-R (International Telecommunication Union - Radiocommunication Sector) gibt eine ITU-RF-Serie heraus, die Empfehlungen für Standards für Punkt-zu-Punkt-Richtfunkverbindungen abdecken. Dazu gehören Frequenzzuweisungen, Leistungsspektren und andere technische Parameter, z.B.: ITU-R F.746-11, F.1099-2.

IEEE 802.16 (Institute of Electrical and Electronics Engineers, WiMAX) ist ein Standard für drahtlose Breitbandverbindungen, der auch Richtfunktechnologien integriert. WiMAX wird häufig für die Bereitstellung von Internetdiensten in ländlichen oder schwer zugänglichen Gebieten verwendet.

Das ETSI (European Telecommunications Standards Institute) stellt mit EN 302 217 einen Standard für Punkt-zu-Punkt-Funkverbindungen bereit, der technische Anforderungen und Prüfmethoden festlegt. EN 301 213 sind Standards für Punkt-zu-Multipunkt-Systeme.

Die FCC (Federal Communications Commission) in den USA regelt die Nutzung von Frequenzen für Richtfunk. Verschiedene Teile des FCC-Regelwerks (z. B. Teil 101) behandeln Richtfunkdienste.

Die 3GPP 5G NR (New Radio)-Technologie umfasst auch Richtfunkkomponenten, insbesondere für die Anbindung von Basisstationen (Backhaul) und als Teil der Netzarchitektur, um hohe Datenraten und geringe Latenzen zu gewährleisten.

Darüber hinaus existieren NATO (North Atlantic Treaty Organization) Standards für militärische Anwendungen, die Richtfunktechnologien und ihre Nutzung in verschiedenen militärischen Szenarien regeln.

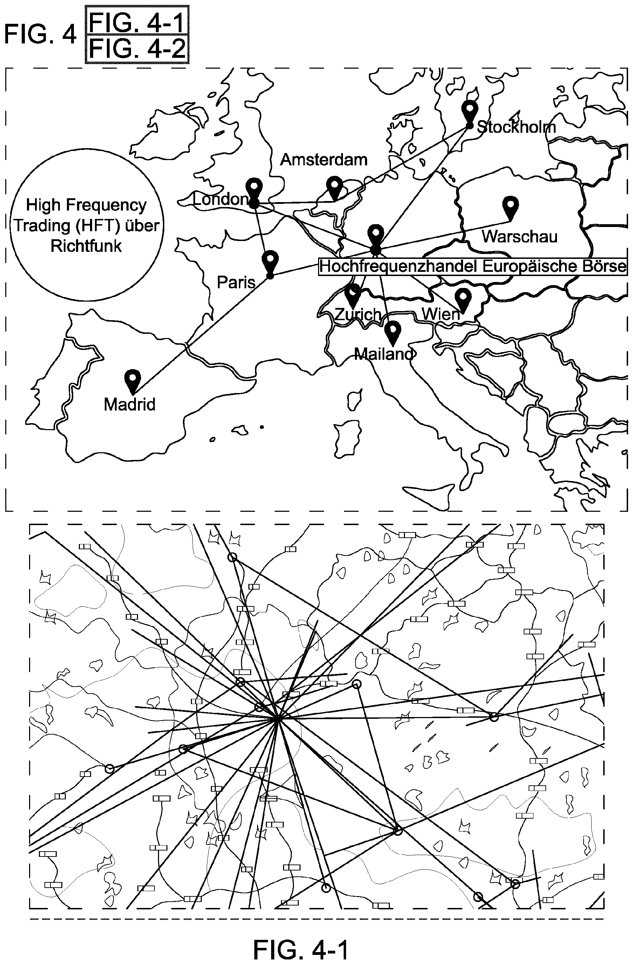

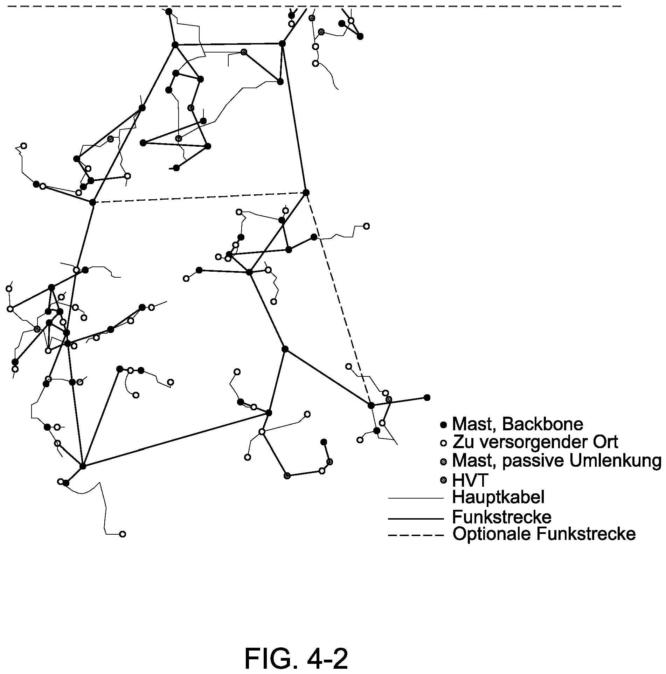

Ausführungsbeispiele können ein Verfahren zur Absicherung verrauschter Richtfunk- Kommunikationskanäle bereitstellen. Richtfunkstrecken spielen eine wichtige Rolle, nicht nur in deutschen und europäischen Netzwerken. Im Gegensatz zu Glasfaserverbindungen lassen sie sich schnell realisieren und können eine wichtige Rolle bezgl. der Internetversorgung abgelegener Gebiete spielen. Immer, wenn kein Glasfaseranschluss vorliegt, erlauben es Richtfunkverbindungen, die Lücke schnell und bedarfsgerecht zu schließen. Dabei lassen sich Datendurchsätze im Gbit/Sekunde Bereich bei Verfügbarkeiten von 99,995% erzielen. Richtfunkstrecken werden in Deutschland vielfach eingesetzt. Die Fig. 4 zeigt Beispiele von Richtfunkstrecken, wobei oben ein europäisches High Frequency Trading (HFT) Netzwerk dargestellt ist, welches über Richtfunkstrecken realisiert wurde, vgl. https://www.dfmg.de/de/unsere-leistungen/richtfunkanbindungen.html .

Die Linien in der gezeigten Europakarte (Fig. 4 oben) zeigen dabei die Richtfunkstrecken an. So werden von Frankfurt aus viele Metropolen sternförmig angebunden (z.B. London, Paris, Amsterdam, Warschau usw.) und beispielsweise Madrid über eine Relaisstrecke Frankfurt-Paris-Madrid erreicht.

Fig. 4 zeigt in der Mitte und unten weitere Richtfunkstrecken wie in Ausführungsbeispielen verwendet werden. Fig. 4 zeigt in der Mitte ein Netzwerk aus Richtfunkstrecken im Münchener Raum, vgl. https://community.openstreetmap.org/t/richtfunkstrecken/67743 bzw. unten ein Richtfunk Backbone Netzwerk eines kommerziellen Anbieters in Deutschland, vgl. https://www.pandacomdirekt.de/fileadmin/user_upload/Downloads/Richtfunk/Richtfunk-Bro-schuere.pdf.

Die Deutsche Telekom betreibt insgesamt 9000 Richtfunkstrecken, die zusammen 90.000km Strecke überbrücken. Die Deutsche Telekom nutzt weiterhin Richtfunk, wenn der Glasfaserausbau wirtschaftlich nicht sinnvoll ist, vgl. https://www.golem.de/news/mobilfunk-deutsche-telekom-betreibt-noch-9-000-richtfunkstrecken-1706-128609.html .

Die "Deutsche Funkturm" verfügt in Deutschland über ein Netzwerk von 34.600 Standorten, 550 Funktürmen, die teilweise Richtfunkverbindungen implementieren oder implementieren könnten, vgl. https://www.dfmg,de/de/unsere-leistungen/richtfunkanbindungenhtml#:~:text=550%20großen%20Femmeldetürmen .

Neben der Deutschen Telekom existieren weitere Anbieter, die Richtfunkverbindungen für Unternehmen, Universitäten oder Krankenhäuser anbieten, vgl.

https://www.pandacomdirekt.de/fileadmin/user_upload/Downloads/Richtfunk/Richtfunk-Bro-schuere.pdf .

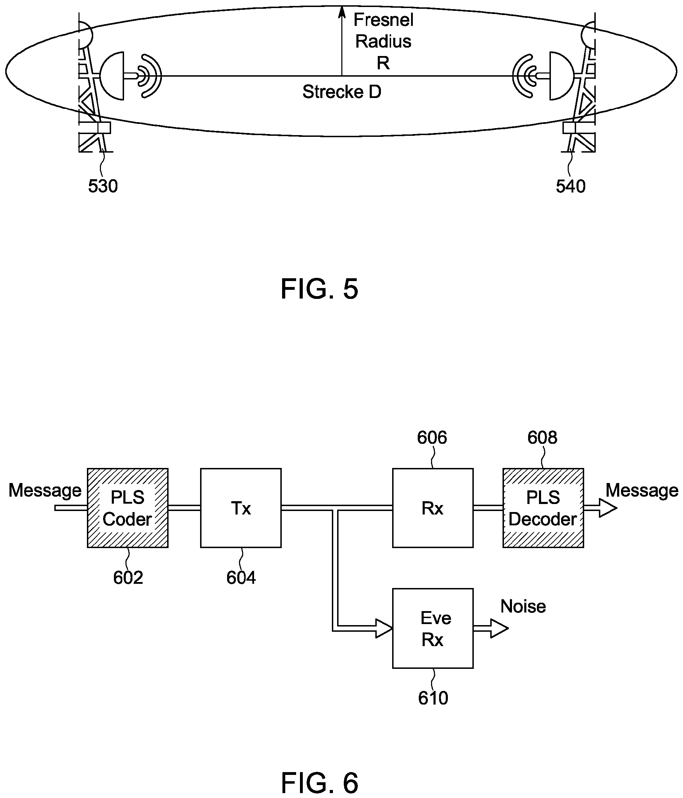

Fig. 5 illustriert eine Richtfunkstrecke in einem Ausführungsbeispiel. Dabei wird zwischen dem Sender 530 die Strecke D zum Empfänger 540 überbrückt. Wird von einer bidirektionalen Verbindung ausgegangen, so befinden sich entsprechende Vorrichtungen 30, 40 für Sender und Empfänger auf beiden Seiten der Strecke. Für die beiden Verbindungsrichtungen sind verschiedene Trennungsprinzipien denkbar, wie beispielsweise Frequenz-Duplex (Frequency Division Duplex (FDD)) oder Zeitbereichs-Duplex (Time Division Duplex (TDD), usw. Fig. 5 zeigt den Aufbau einer typischen Punkt-zu-Punkt Richtfunkverbindung mit einer Richtfunkstrecke über die Distanz D. Der ellipsenförmige Bereich in der Fig. 5 ist die 1. Fresnelzone, vgl. https://de.wikipedia.org/wiki/Fresnelzone ,

in der bestenfalls kein Hindernis die Übertragung über die Richtfunkstrecke stört, sofern Reflexionen vermieden werden sollen, vgl. https://de.wikipedia.org/wiki/Richtfunk .

Die Richtfunkverbindung besteht im vorliegenden Ausführungsbeispiel aus zwei Sendemasten 530, 540, die mit einer Richtfunkantenne, z.B. einer Parabolantenne, ausgestattet sind. Zwischen beiden Parabolantennen ist ein Abstand D, der überbrückt werden soll, je nach natürlicher Umgebung handelt es sich beispielsweise um 20-50km Abstand. Da Funkwellen nicht wie Lichtstrahlen propagieren, reicht es nicht, eine direkte Sichtverbindung zwischen Sender und Empfänger zu ermöglichen. Stattdessen sollte eine Raumzone, die sogenannte erste Fresnelzone, frei von Hindernissen bleiben. Die Fresnelzone ist definiert als der Raum, in der der Gangunterschied der elektromagnetischen Welle zur kürzesten Sichtverbindung maximal eine halbe Wellenlänge beschreibt. Somit ist die Fresnelzone ein Ellipsoid mit dem Sender und dem Empfänger in seinen Brennpunkten. Der größte Abstand von der direkten Sichtlinie wird durch den Ausdruck $R = 0,5 * \sqrt{\lambda D}$ beschrieben, wobei $\lambda$ die Wellenlänge bezeichnet. Die Fresnelzone wird also breiter für größere Wellenlängen und längere Richtfunkstrecken. Die folgende Tabelle zeigt die maximale Ausdehnung der Fresnelzone für unterschiedliche Distanzen und Wellenlängen.

| Distanz D [km] | Frequenz [GHz] | Wellenlänge [mm] | Fresnelradius [m] |
|---|---|---|---|
| 3 | 70 | 4,3 | 1,8 |
| 3 | 26 | 11,5 | 2,94 |
| 10 | 18 | 16,7 | 6,46 |
| 10 | 7 | 42,8 | 10,34 |
| 50 | 7 | 42,8 | 23,13 |

Die Größe der Fresnelzone erklärt, weshalb Richtfunkstrecken generell auf Funktürmen > 20m Höhe montiert werden. Nichtsdestotrotz bleiben die Funksignale tendenziell für einen Angreifer erreichbar, indem dieser eine kleine Antenne in die Fresnelzone hineinführt und die Funksignale abgreift. Auch außerhalb der Fresnelzone lassen sich Signale abgreifen - allerdings sind diese dort noch schwächer.

Ein Angriff dort würde die Richtfunkverbindung nicht mehr stören, während ein Angriff innerhalb von R aufgrund von Reflexionen/Beugung detektierbar sein sollte. Laut Wikipedia kann davon ausgegangen werden, dass bestehende Richtfunkverbindungen durch die Geheimdienste observiert und ausgewertet werden.

Ein weiterer bekannter Angriff ist die Nutzung eines Satelliten, der die Richtfunksignale am Horizont hinter der Empfängerstation auffängt. Die Richtfunkstrahlen weiten sich in diesen Distanzen signifikant auf und lassen diesen Angriff, sofern er mit Spionageantennen mit hohem Antennengewinn (Gain) durchgeführt wird, zu, vgl. https://de.wikipedia.org/wiki/Richtfunk , Sektion Überwachung und Spionage.

Die Sicherheit der Richtfunkverbindungen basiert auf klassischer Kryptographie auf OSI (Open Systems Interconnection model) Layer 1-3, vgl. https://www.pandacomdirekt.de/unsere-produkte/detail/verschluesselung.html .

Generell nutzt man symmetrische AES-Verschlüsselung (Advanced Encryption Standard) mit 256 Bit Schlüsseln, die sogar als quantensicher einzustufen ist. Die Verhandlung des kryptographischen Schlüssels beruht aber auf klassischer, asynchroner Kryptographie, die zukünftig durch Quantencomputer angreifbar werden könnte. Der Wechsel zu quantensicherer Kryptographie wird dadurch unausweichlich. Jedoch kann auch die Physical Layer Security (PLS), bzw. eine Kombination aus quantensicher Kryptographie und PLS eingesetzt werden, um Richtfunkstrecken zu sichern. Zumindest manchen Ausführungsbeispiele setzen PLS nach einem modularen Schema für den Einsatz in Richtfunkstrecken ein.

Ausführungsbeispiele können eine Methode nutzen, die mit Hilfe der "Physical Layer Security" (PLS) eine informationstheoretisch sichere Verschlüsselung der übertragenen Daten über Richtfunknetzwerke realisiert. PLS gilt als informationstheoretisch sicher, vgl.

Luis Torres-Figueroa, "Implementation of Physical Layer Security into 5G NR Systems and E2E Latency Assessment", GlobeCom 2022, Rio de Janeiro, solange der gewollte Empfänger ein besseres Signal zu Rausch (S/R) Verhältnis hat als der mögliche Angreifer. Sicherheitsbeweise sind damit abhängig von dem S/R des möglichen Angreifers und existieren bereits als Demonstrator in WiFi Netzwerken und 5G Netzwerken. Erste Demonstratoren für Satellitennetzwerke entstehen.

Die Realisierung der PLS-Methode wird als modulare Operation auf den digitalen Datenstrom angewendet, bevor dieser in das Sendegerät geschickt wird. Die Sicherheit wird durch einen Sicherheitscode realisiert, der über ein mathematisches Verfahren, welches die Nachricht mit einer Folge von Zufallszahlen kodiert, die beim Sender und Empfänger zugleich verteilt wurden. Das Sendegerät übernimmt dann den Versand der Nachricht. Auf der Empfängerseite läuft der Prozess in Gegenrichtung ab. Das Verfahren verläuft analog zu den in EP22209986 beschriebenen Verfahren für Next-Generation-Mobilfunk und WiFi Verbindungen. Der Inhalt der EP22209986 wird in die vorliegende Offenbarung durch Verweis mit aufgenommen.

Fig. 6 zeigt ein Blockdiagramm einer Absicherung auf der physikalischen Schicht in einem Ausführungsbeispiel. Fig. 6 zeigt die Abfolge der Prozessschritte. Der PLS Encoder 602 erzeugt aus einer Nachricht m einen PLS Sicherheitscode c, indem die Nachricht m mit einer Folge von Zufallszahlen r verarbeitet wird, so dass $c = f^{(-1)}(m, r)$. In der Abbildung $m \rightarrow f\{-1\}(m,r)$ steckt auch Zufall, welchen allerdings nur der Sender benötigt. Denn der Sender wählt aus allen möglichen Elementen x, so dass $f(x,r)=m$, zufällig ein x aus. Die Nachricht wird dann über die Sendeeinheit 604 und den Empfänger geschickt, wo die Nachricht zunächst von der Empfangseinheit 606 empfangen wird. Der Decoder 608 ist wieder in der Lage die Nachricht m über $m = f(c,r)$ zu berechnen. Die Besonderheit ist, dass ein ungewollter Empfänger Eve 610 nicht in der Lage ist, die Nachricht m zu bestimmen. Die Details des mathematischen Verfahrens werden in EP22209986 im Detail beschrieben und hier mit aufgenommen.

Die Fig. 6 zeigt eine Darstellung der "Physical Layer Encodings" nach EP22209986. Die Sende- (Tx 504) und Empfangseinheiten (Rx 506) sind die Endpunkte eines verrauschten Kommunikationskanals. Die Anwendung des PLS-Verfahrens durch einen modularen Rechner vor der Sendeeinheit (Coding 502) und nach der Empfangseinheit (Decoding 508) erzeugen ein Signal, welches durch den bestimmten Empfänger dekodierbar ist, ein ungewollter Empfänger (Eve 510) aber nur Rauschen messen kann.

Die Sicherheit der Methode hängt von den physikalischen Eigenschaften des Kommunikationsverfahrens und den daraus resultierenden Rauschverhältnissen an unterschiedlichen Empfängern ab. Letztendlich muss bewiesen werden, unter welchen Kriterien ein potenzieller Angreifer ein besseres Signal-zu-Rausch (S/R) Verhältnis erlangen kann als der rechtmäßige Empfänger der Nachricht, um die Sicherheit des PLS-Verfahrens für die Richtfunkkommunikation bewerten zu können.

Das Verfahren 10 für den Sender 300 kann in weiteren Ausführungsbeispielen optional ein Empfangen einer Rückmeldung über eine Übertragungsqualität von dem Empfänger umfassen. Das Verfahren kann dann ein Einstellen eines oder mehrerer Übertragungsparameter für das Senden der geschützten Nachricht und/oder ein Einstellen einer Vorschrift für das Einfügen der Rauschanteile umfassen. Es kann auch ein Anpassen einer Übertragungsqualität durch Einstellen eines oder mehrerer Übertragungsparameter für das Senden der geschützten Nachricht und/oder ein Einstellen einer Vorschrift für das Einfügen der Rauschanteile erfolgen. Demnach kann für die Richtfunkverbindung zwischen Sender und Empfänger eine Regelung oder Steuerung implementiert sein, die die Übertragungsparameter, beispielsweise eine Coderate, Modulation, Sendeleistung, usw. an aktuelle Gegebenheiten anpasst. Typischerweise geschieht dies anhand von Messungen/Schätzungen am Empfänger, die ein Maß für die Übertragungsqualität darstellen, so kommen beispielsweise Bitfehlerraten, wie Bit Error Rate, Block Error Rate (BER), Frame Error-Rate (FER), usw. in Frage oder auch Bitenergie bezogen auf die Rauschleistungsdichte (Eb/N0), Signal-zu Interferenz Verhältnis, Signal-zu Rausch Verhältnis (SNR) oder Signal-zu-Rausch-und-Interferenz Verhältnis in Frage (SINR), usw. die auch miteinander zusammenhängen. Typischerweise erfordert eine erfolgreiche Übertragung eine gewisse Übertragungsqualität, die beim Empfänger bestimmt wird und dann über Rückmeldung an den Sender nachgeführt wird.

In gleicher Weise kann das Einfügen der Rauschanteile an die Übertragung angepasst werden. Wie bereits oben erläutert, kann die Abhörsicherheit dann gewährleistet werden, wenn die Signalqualität (z.B. SNR, SIR, SINR, Eb/N0 usw.) bei einem potenziellen Abhörer zur Signalqualität beim legitimen Empfänger schlechter ist. Beispielsweise stehen diese in einem gewissen Verhältnis und sind bestimmend für einen Anteil des zur Absicherung notwendigen Rauschanteils. So können die Übertragungsparameter eingestellt werden, basierend auf der Übertragungsqualität und basierend auf einem zur Absicherung der Richtfunkverbindung notwendigen Signalqualitätsunterschied für einen Abhörer relativ zu einer Signalqualität beim legitimen Empfänger und/oder basierend auf der Übertragungsqualität und basierend auf einem geschätzten Signalqualitätsunterschied für einen Abhörer relativ zu einer Signalqualität beim legitimen Empfänger, um die Nachricht vor einem Abhören zu sichern. Nachdem der Signalqualitätsunterschied beim Abhörer nicht gemessen werden kann, wird dieser beispielsweise dadurch geschätzt, dass man einen Mindestabstand zwischen legitimen Empfänger und Abhörer annimmt, bzw. Annahmen in Bezug auf die Empfangsapertur, die Qualität der Empfangskomponenten und das Rauschen beim Abhörer macht. Daraus ergibt sich mit den bekannten Ausbreitungsverhältnissen auch eine Annahme oder Schätzung für eine empfangbare Energie/Leistung des Nutzsignals bei Abhörer, worauf sich eine Schätzung der Signalqualität bei Abhörer stützen lässt, zumindest jedoch ein Signalqualitätsunterschied zwischen Abhörer und legitimen Empfänger.

Demnach kann auf der Senderseite das Einstellen eines oder mehrerer Übertragungsparameter für das Senden der geschützten Nachricht und/oder das Einstellen einer Vorschrift für das Einfügen der Rauschanteile basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen der Übertragungsparameter und/oder der Vorschrift basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Analog kann das Verfahren 20 für den Empfänger 400 ein Rückmelden einer Information über eine Empfangsqualität an den Sender zum Anpassen einer Übertragungsqualität durch Einstellen eines oder mehrerer Übertragungsparameter für das Senden der geschützten Nachricht und/oder Einstellen einer Vorschrift für das Einfügen/Entfernen der Rauschanteile umfassen. Wie oben bereits erläutert kann das Einstellen basierend auf der Übertragungsqualität und basierend auf einem zur Absicherung der (Richt-) Funkverbindung notwendigen Signalqualitätsunterschied für einen Abhörer relativ zu einer Signalqualität beim legitimen Empfänger, und/oder basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Die zusätzlich eingefügten Rauschanteile können ferner auf einem oder mehreren Zufallswerten basieren, die dem Sender und dem Empfänger bekannt sind. Diese Zufallswerte werden auch als "Seed" bezeichnet und können so Eingangswerte für eine Funktion darstellen, die dann ein oder mehrere weitere Zufallswerte generiert. Dabei sind bezüglich der Verteilung der Zufallswerte verschiedene Szenarien möglich, beispielsweise können die Zufallswerte ein gemeinsames Geheimnis des Senders und Empfängers darstellen oder sie können auch öffentlich bekannt sein. Weitere Details finden sich in EP 22209986, EP 23196965 und EP 24174614 deren Inhalte hierin durch Verweis inkludiert sind. In Ausführungsbeispielen kann das Einfügen 12 oder das Entfernen 23 der zusätzlichen Rauschanteile auf einer oder mehreren Zufallszahlen basieren, die dem Sender und dem Empfänger bekannt sind. Die Verfahren 10, 20 können vorsehen, dass ein Sicherheitscode basierend auf den ein oder mehreren Zufallszahlen erzeugt wird und das Einfügen/Entfernen der Rauschanteile basierend auf dem Sicherheitscode erfolgt.

Die Sicherheit der Methode hängt von den physikalischen Eigenschaften des Kommunikationsverfahrens und den daraus resultierenden Rauschverhältnissen an unterschiedlichen Empfängern ab. Letztendlich muss bewiesen werden, unter welchen Kriterien ein potenzieller Angreifer ein besseres Signal-zu-Rausch (S/R, SNR) Verhältnis erlangen kann als der rechtmäßige Empfänger der Nachricht, um die Sicherheit des PLS-Verfahrens für Richtfunk-Kommunikation bewerten zu können. Das S/R, SNR ist dabei als Beispiel zur Bewertung der Signalqualität zu verstehen. Ergänzend oder alternativ können auch andere Signalqualitätsmaße betrachtet werden, wie beispielsweise SIR, SINR, Eb/N0 usw. Welches dieser Qualitätsmaße im jeweiligen System verwendet wird, hängt von der Systemplanung und den Systemparametern ab.

Da die Sicherheit des PLS-Verfahrens und die Konfiguration des Sicherheitscodes auf dem bestmöglichen Signal-zu-Rausch Verhältnis, das ein Angreifer erlangen kann, beruht, müssen die S/N Werte für die unterschiedlichen Kommunikationsarten zwischen den Richtfunkantennen abgeschätzt werden.

Der Signal-zu-Rauschabstand am Ort eines Empfängers ist definiert als

$$\text{SNR} = \frac{P_{Signal}}{P_{Rauschen}} \ .$$

Zur Bestimmung der Signalstärke eines Richtfunk-Empfängers in Abhängigkeit von der Sendeleistung es Senders, wird hier den Ausarbeitungen von Dr. Güttner gefolgt, vgl. http://www.guetter-web.de/education/npnt/npnt_4.pdf.

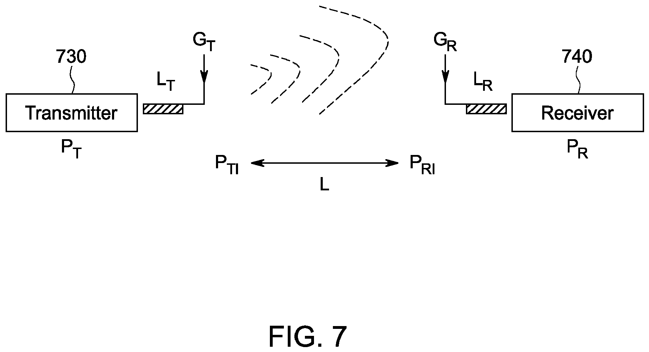

Fig. 7 zeigt einen Aufbau einer Richtfunkstrecke in einem weiteren Ausführungsbeispiel. Der Sender 730 (Transmitter) ist auf der linken Seite gezeigt und der Empfänger 740 (Receiver) auf der rechten Seite. Entscheidend für die Bestimmung des SNR ist die genaue Beschreibung des Pfadverlustes L.

Die Richtfunkstrecke besteht aus den folgenden Leistungsbeschreibungen

| Sendeleistungen | Beschreibung |
|---|---|
| $P_T$ | Gesendete Leistung |
| $P_{TI}$ | Abgestrahlte Leistung |
| $P_{RI}$ | Aufgenommene Leistung |
| $P_R$ | Empfangene Leistung |

Die Verluste bzw. die Gewinne sind:

| Verluste / Gewinne [dB] | Beschreibung |
|---|---|
| $L_{PT}$ | Leistung des Senders |
| $L_T$ | Zuleitungsverluste zur Antenne |
| $L_{GT}$ | Gain (Gewinn) der Sendeantenne |
| $L_{GR}$ | Gain (Gewinn) der Empfangsantenne |
| $L_R$ | Ableitungsverluste (Antenne-Verstärker) |
| L | Pfadverlust, d.h. der Verlust entlang der schützenswerten Richtfunkstrecke |
| $L_{PR}$ | Leistung des Empfängers |

Die empfangene Leistung $L_{PR}$ [dB] ergibt sich zu

$$L_{PR} = L_{PT} - L_T + L_{GT} - L + L_{GR} - L_R$$

Die Verstärkung (Gain) der Antennen sind eine Eigenschaft der Antennengeometrie, während der Pfadverlust von den Bedingungen der Funkstrecke abhängen.

Zu beachten ist, dass die Verluste L bzw. Gewinne G über eine logarithmische/exponentielle Beziehung mit den Leistungen P verbunden sind. Es gilt:

$$L_{PR} = 10 \log (P_T / P_R)$$

wobei $P_T$ und $P_R$ die Sende und die Empfangsleistung beschreibt. Für $P_R$ ergibt sich daher

$$P_R = \frac{P_T}{10^{L_{PR}/10}}$$

Pfadverluste:

Die Pfadverluste einer Richtfunkstrecke hängen von den physikalischen Gegebenheiten und der Umgebung der Richtfunkstrecke ab. Diese sind

1. Freiraumdämpfung:

Unter der Freiraumdämpfung versteht man die Reduzierung der Leistungsdichte gemäß dem quadratischen Abstandsgesetz und die mit der Frequenz schrumpfende Wirkfläche einer Empfangsantenne ohne Antennengewinn, vgl. https://de.wikipedia.org/wiki/Freiraumdämpfung .

Die Freiraumdämpfung $L_{FR}$ wird beschrieben durch

$$L_{FR} = 10 \log\left(\frac{4\pi R}{\lambda}\right)^2 = 32{,}44 \,+\, 20 \log(\text{f [MHz]}) \,+\, 20 \log(\text{R [km]})$$

2. Atmosphärische Dämpfung:

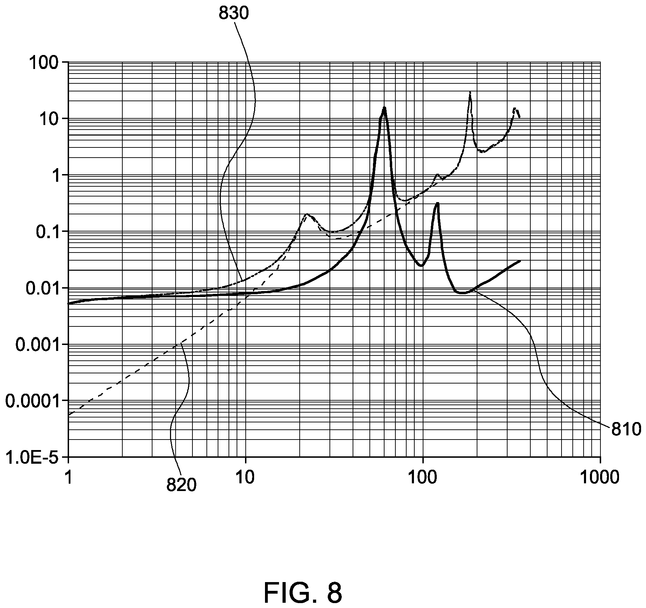

Atmosphärische Dämpfungsverluste bestehen aus einer atmosphärischen Grunddämpfung sowie einer stark wetterabhängigen Zusatzdämpfung durch Nebel und Regen. Fig. 8 zeigt eine Darstellung der atmosphärischen Dämpfung von Funkwellen als Funktion der Frequenz. Die Fig. 8 stellt auf der Ordinate die Dämpfung in dB/km und auf der Abszisse die Frequenz in GHz dar. Dabei sind die Verläufe für trockene Luft 810, Nebel 820 (Wasserdichte 7,5gm/m$^3$) und die Gesamtdämpfung 830 dargestellt für einen Luftdruck von 1013hPa und eine Temperatur von 293,5 K. Fig. 8 zeigt die atmosphärische Dämpfung als Funktion der Frequenz der elektromagnetischen Strahlung. Dargestellt sind die Kurven für Wasserdampf 810 und trockene Luft 820. Die zusätzliche Dämpfung beträgt ca. 0,01dB/km, vgl. https://www.itu.int/rec/R-REC-P.676-6-200503-S/en .

3. Regen:

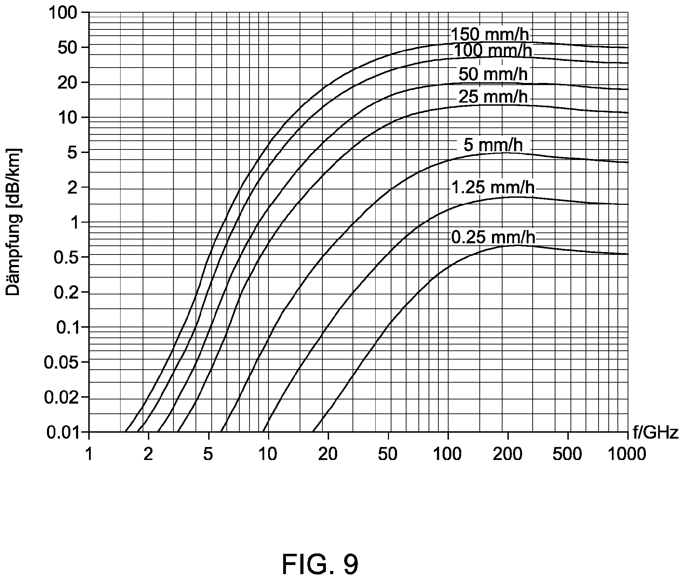

Fig. 9 zeigt eine Darstellung der niederschlagbedingten Dämpfung von Funkwellen als Funktion der Frequenz. Dabei ist die Dämpfung in dB/km auf der Ordinate und die Frequenz in GHz auf der Abszisse dargestellt. Fig. 9 zeigt den Verlauf Dämpfung aufgrund von atmosphärischem Niederschlag als Funktion der Wellenlänge der elektromagnetischen Strahlung. Bei Starkregen sollte bei 10 GHz Richtfunk eine zusätzliche Dämpfung von 5 dB/km angenommen werden, vgl.

Alain Delrieu, Meeting for World Radio Communication 2007, Bangkok.

4. Sicherheitsreserven:

Unter Sicherheitsreserven versteht man einen einzurechnenden Puffer, der die Leistung des Systems unter allen Umständen sicherstellt. Beispiele sind hier, vgl. http://www.guetter-web.de/education/npnt/npnt_4.pdf ,

Gebäudedämpfung: ca. 5-35 dB, 15dB für ein typisches Haus,
Fahrzeugdämpfung: ca. 6dB,
Mehrwegeeinflüsse: z.B. durch Reflexionen an der Erde oder der Ionosphäre. 11dB für große Abstände, 8dB für kleine Abstände, 5dB für Abschattungen.

In http://www.guetter-web.de/education/npnt/npnt_4.pdf wird ein numerisches Beispiel für eine Richtfunkstrecke mit 5km Distanz, 6 GHz Frequenz und bei starkem Regen berechnet. Es ergibt sich:

Freiraumdämpfung: 121,9 dB
Atmosphäre: 0,1 dB
Starkregen: 25 dB
Sicherheitsreserve: 20 dB

- Summe der Pfadverluste: L = 167 dB

Antennengewinne:

Richtfunk im GHz Bereich verwendet typischerweise Parabolantennen, um die geeignet Richtwirkung zu realisieren. Der Gewinn (Gain) einer Parabolantenne kann über https://www.everythingrf.com/rf-calculators/parabolic-reflector-antenna-gain berechnet werden. Es ergibt sich

| Durchmesser [m] | Frequenz [GHz] | Gain [dB] |
|---|---|---|
| 0,5 | 7 | 29 |
| 1 | 7 | 35 |
| 2 | 7 | 41 |
| 0,5 | 18 | 37 |
| 1 | 18 | 43 |
| 2 | 18 | 49 |
| 0,5 | 26 | 41 |
| 1 | 26 | 47 |
| 2 | 26 | 53 |
| 0,5 | 70 | 49 |
| 1 | 70 | 55 |
| 2 | 70 | 61 |

Verlustbilanz der Richtfunkstrecke:

Somit ergäbe sich für das durchgerechnete Beispiel ein Verlust von

$$167 db - 2 * 40\,dB = 87 dB$$

bei Verwendung von zwei Parabolantennen von 40dB Gewinn. Für die empfangene Leistung ergibt sich daher

$$P_R = \frac{P_T}{10^{(L_{PR})/10}} = \frac{P_T}{10^{(L_{PT} - L_T + L_{GT} - L + L_{GR} - L_R)/10}}$$

Rauschleistung:

Thermisches Rauschen lässt sich durch den Ausdruck

$$P_{Rauschen} = B k T_{sys}$$

ausdrücken, wobei B die Bandbreite des Signals, k die Boltzmannkonstante und $T_{sys}$ die Systemtemperatur beträgt. $T_{sys}$ besteht dabei aus der Temperatur des Senders, der Temperatur des Detektors und einer "effektiven Temperatur" der Übertragungsstrecke. Der genaue Wert der Systemtemperatur $T_{sys}$ ist für die Betrachtungen hier nicht relevant, da potenzielle Angreifer und rechtmäßige Empfänger dieselbe Umgebungstemperatur auf allen drei Komponenten detektieren. Alleinig bei der Detektortemperatur könnte sich ein Angreifer durch entsprechende Kühlmechanismen einen Vorteil verschaffen - allerdings mit der Gefahr durch die notwendige Aggregatgröße eines Kühlsystems auffälliger agieren zu müssen. Der Temperaturvorteil beim Detektionssystem macht in der Regel (250K / 300K = 0,83) ca. 20% aus.

Signal-zu-Rausch Abstand:

Der Signal-zu-Rausch Abstand am Empfänger ist nun der Quotient aus empfangener Leistung und Rauschleistung, daher

$$SNR = \frac{P_{Signal}}{P_{Rauschen}} = \frac{P_T}{BkT_{sys} * 10^{L_{PR}/10}} = \frac{P_T}{BkT_{sys} * 10^{(L_{PT}-L_T+L_{GT}-L+L_{GR}-L_R)/10}}$$

Verhältnis SNR des rechtmäßigen Empfängers vs Angreifers:

Das Verhältnis des SNR eines Angreifers $SNR_A$ zum SNR des rechtmäßigen Empfängers $SNR_R$ beträgt

$$\log\left(SNR_A/SNR_R\right) = \log\left(10^{\frac{L_{PT}-L_T+L_{GT}-L+L_{GR}-L_R}{10}}\Big/10^{\frac{L_{PT}-L_T+L_{GT}-L_A+L_{GA}-L_R}{10}}\right) =$$

$$\log\left(10^{\frac{L_{GR}-L_{GA}+L_A-L}{10}}\right) = \frac{L_{GR}-L_{GA}+L_A-L}{10} <\,! \,0\,,$$

wobei

| | |
|---|---|
| $L_{GR}$ | Gain der Antenne des rechtmäßigen Empfängers |
| $L_{GA}$ | Gain der Antenne des Angreifers |
| $L$ | Pfadverlust zwischen Sender und rechtmäßigem Empfänger |
| $L_A$ | Pfadverlust zwischen Sender und Angreifer |

PLS schützt eine Richtfunkverbindung gegenüber Interception (Abhör-) Angriffen, sofern der Ausdruck $L_{GR}$ - $L_{GA}$ + $L_A$ - $L$ < ! 0 ist.

Angriff mit einer Drohne, die direkt auf der Strahlachse angreift:

- Angreifer greift das Signal direkt vor der Empfängerantenne ab:

  ○ $L = L_A$
  ○ $L_{GR}$ - $L_{GA}$ < ! 0 kann nur erreicht werden, wenn der Angreifer einen höheren Antennengain hat. Dies kann nur durch eine größere Angreiferantenne erreicht werden.
  ○ $L_{GA} > L_{GR}$ bedeutet, dass die Angreifer-Antenne die rechtmäßige Empfangsantenne abdeckt und ein solcher Angriff die Richtfunkstrecke nicht unentdeckt bleiben könnte. Es läge ein "Denial of Service" Angriff vor.

- Angreifer greift das Signal in der Mitte der Strecke ab:

  ○ Für den Angreifer gilt:

    ○ Freiraumdämpfung: 115,6 dB
    ○ Atmosphäre: 0,05 dB
    ○ Starkregen: 12,5 dB
    ○ Sicherheitsreserve: 20 dB
    ○ Summe der Pfadverluste: $L_A$ = 148,15 dB
    ○

$$L_{GR} - L_{GA} + L_A - L = L_{GR} - L_{GA} - 18{,}85\,dB <\,! \,0$$

    ○ Somit müsste der Angreifer mit einer Antenne angreifen, die einen 18,85dB größeren Gain hat, um das Signal dekodieren zu können.
    ○ Die folgende Tabelle zeigt die Dimension der Angriffsantenne gegenüber der Antennengröße des rechtmäßigen Empfängers:

| Durchmesser Antenne Empfänger [m] | Gain Antenne Empfänger [dB] | Min Gain Antenne Angreifer [dB] | Durchmesser Antenne Angreifer [m] |
|---|---|---|---|
| 0,5m | 32 | 13 | 0,06 |
| 1m | 38 | 19 | 0,11 |
| 2m | 44 | 25 | 0,22 |
| 3m | 48 | 29 | 0,34 |
| 4m | 50 | 31 | 0,5 |

Die berechneten Werte gelten für einen Angreifer, der genau auf der direkten Sichtlinie zwischen Sender und Empfänger operiert. Dies könnte z.B. durch eine Drohne erfolgen, die eine Parabolantenne trägt.

Es wird ersichtlich, dass bei hinreichend großer Antennengröße des Richtfunksystems, die Anforderungen an die Antennengröße eines drohnengestützten Angreifers zu hoch werden, um unentdeckt operieren zu können. In einem Ausführungsbeispiel von

- 4m Antennendurchmesser der Richtfunkstrecke
- 10 GHz Frequenz
- 5 km Länge

müsste ein Angreifer bereits eine Antenne von ca. 50cm Durchmesser stabil auf der Sichtlinie halten, um ein Signal erfolgreich dekodieren zu können. Es bleibt anzunehmen, dass ein solcher Angriff auffallen und nicht unentdeckt bleiben würde.

- Angreifer greift das Signal direkt vor der Sendeantenne ab.

  ◦ Für den Angreifer gilt bei 100m Abstand vom Sender:

    ◦ Freiraumdämpfung: 98 dB
    ◦ Atmosphäre: 0 dB
    ◦ Starkregen: 0,25 dB
    ◦ Sicherheitsreserve: 20 dB
    ◦ Summe der Pfadverluste: $L_A$ = 118,25 dB
    ◦

$$L_{GR} - L_{GA} + L_A - L = L_{GR} - L_{GA} - 48, dB <\ ! \ 0$$

| Durchmesser Antenne Empfänger [m] | Gain Antenne Empfänger [dB] | Min. Gain Antenne Angreifer [dB] | Durchmesser Antenne Angreifer [m] |
|---|---|---|---|
| 4m | 50 | 2 | 0,015 |

Eine Drohne, die mit einer Parabolantenne bestückt nahe der Sichtachse eine Richtfunkstrecke angreift, hat, abhängig vom Ort des Angriffs, unterschiedliche Erfolgsaussichten. Nahe dem Sender reichen bereits kleine Parabolantennen aus, um einen besseren SNR als die legitime Empfangsantenne zu erhalten. Nahe der Mitte der Richtfunkstrecke und nahe dem Empfänger müssten die Parabolantennen schon eine beachtliche Größe haben, um diesen Effekt zu erzielen. Da eine Richtfunkstrecke bidirektional sendet, d.h. in einem Frequenzband von A nach B und auf einem anderen Frequenzband von B nach A, hätte ein Angreifer in der Mitte der Verbindung die größten Chancen. Nahe dem Sender wäre nur eine Funkrichtung gefährdet, während die andere Richtung sicher bleibt. Allerdings stellt das Tragen und die exakte Ausrichtung zweier Parabolantennen signifikanter Größe eine Herausforderung an einen Drohnenangreifer dar. Da sich die Drohne dazu allerdings in der Fresnelzone aufhält, wird das Richtfunksystem von dieser Störung beeinträchtigt. Es kommt zu Reflexionen und Beugungseffekten aufgrund der Drohne und die transmittierte Datenrate nimmt ab. Diese temporäre Verschlechterung des physikalischen Kanas lässt sich über klassische Überwachungssysteme feststellen.

Das Verfahren 10 kann daher in manchen Ausführungsbeispielen ein Überwachen der Richtfunkverbindung auf Signalveränderungen oder Veränderungen im Luftraum der Richtfunkverbindung umfassen, die auf einen Abhörversuch hinweisen. Beispielsweise kann ein Anpassen des Einfügens von Rauschanteilen erfolgen, wenn Hinweise auf einen Abhörversuch vorliegen. Ergänzend oder alternativ können auch Übertragungsparameter, z.B. Kodierung, Sendeleistung, Verschlüsselung, Frequenz, usw., angepasst werden, wenn Hinweise auf einen Abhörversuch vorliegen. Um die Übertragung noch sicherer zu machen kann ein dynamisches Variieren des Einfügens von zusätzlichen Rauschanteilen zum Schutz vor etwaigem Abhören der Richtfunkverbindung und/oder zur Erhöhung der Systemresilienz stattfinden. So können beispielsweise die Zufallswerte regelmäßig geändert werden, sodass sich die Grundlage für den Sicherheitscode, der die Vorschrift für das Einfügen der Rauschanteile darstellt, ändert und der Abhörer die Änderung erst wieder herausfinden müsste. Beispielsweise können Zufallswerte basierend auf Schwankungen im Funkkanal von Sender und Empfänger bestimmt werden, auf deren Grundlage ein neuer Sicherheitscode ermittelt wird. Ein Abhörer irgendwo zwischen Sender und Empfänger würde dann diese Schwankung nicht messen können, da sein Funkkanal ein anderer ist. Das dynamische Variieren könnte auch ein dynamisches Verändern eines Anteils der Rauschanteile in der geschützten Nachricht umfassen. Als Schutzmaßnahme könnten demnach auch mehr Rauschanteile als vermeintlich notwendig in die Nachricht eingefügt werden.

Das Einfügen der zusätzlichen Rauschanteile kann auch wetterabhängig erfolgen, um den oben bereits erläuterten Schwankung durch unterschiedliche Wetterlagen zu begegnen.

Beim Richtfunk existiert Sichtkontakt. Zumindest in manchen Ausführungsbeispielen kann zwischen Sender und Empfänger ein Lasersignal als Lichtschranke dienen, um einen Abhörversuch in der ersten Fresnelzone zu detektieren. Dabei kann der Laserstrahl mit einer einfachen Laserquelle (z.B. Laserdiode) generiert werden und mit einem oder mehreren Fotodetektoren (z.B. Fotodioden) überwacht werden. Dabei können auch mehrere Laserstahlen verwendet werden, die beispielsweise um die Sichtlinie oder Achse herum in der ersten Fresnelzone angeordnet sind. Denkbar ist auch eine parallele Laser-Sicherheitsverbindung, die PLS benutzt mit einem Zufallswert, der über die Funkverbindung kommuniziert wird. Über eine Abhängigkeit der Sicherheitscodes beider Verbindungen kann zumindest in manchen Ausführungsbeispielen dafür gesorgt werden, dass wenn eine Verbindung auch nur kurz unterbrochen wird, die PLS aus dem Tritt kommt und ein Abhörversuch detektierbar ist.

Da eine Drohne in der Nähe des Senders mit einer kleinen Antenne auskäme, wird die Richtfunkverbindung an dieser Stelle jedoch unzureichend gesichert. Es wären Zusatzmaßnahmen notwendig.

- Aufspaltung der Verkehre in zwei Richtfunkverbindungen (Redundanz der Sichtverbindungen). Wird eine der beiden Teilstrecken erfolgreich angegriffen, kann eine Dekodierung durch eine kryptografische Maßnahme verhindert werden. Zumindest in einigen Ausführungsbeispielen kann eine Aufspaltung auch derart erfolgen, dass die Information aus einer Teilstrecke alleine nicht dekodierbar ist. Dabei sind verschiedene Verwürfelungstechniken (Scrambling) oder Verschlüsselungstechniken vor der Aufspaltung denkbar. Alternativ oder ergänzend können manche Ausführungsbeispiele auch vorsehen, auf den sicheren Link umzuschalten und den unsicheren Link abzuschalten.
- Luftraumüberwachung bzw. Flugverbotszonen
- Drohnenabwehr - in https://www.security-insider.de/drohnenabwehr-mit-laser-richtfunk-und-netz-a-616327/ werden existierende Systeme der Drohnenabwehr beschrieben, die tendenziell auch zur Sicherung und Spionageabwehr von Richtfunkstrecken eingesetzt werden könnten.

In weiteren Ausführungsbeispielen kann das Verfahren 10 auch ein zusätzliches Verschlüsseln der Nachricht mit einem post-quantum-kryptografischen Verschlüsselungsalgorithmus umfassen. Analog kann das Verfahren 20 ferner ein zusätzliches Entschlüsseln der Nachricht mit einem post-quantum-kryptografischen Verschlüsselungsalgorithmus beinhalten.

Quantensichere Verschlüsselung, auch bekannt als post-quantum Verschlüsselung PQC, Post-Quantum Cryptography), bezieht sich auf kryptografische Algorithmen, die gegen Angriffe durch Quantencomputer resistent sind. Diese Art der Verschlüsselung ist notwendig, weil Quantencomputer bestimmte mathematische Probleme, auf denen die derzeitige klassische Kryptographie basiert, wesentlich schneller lösen können. Aktuelle Verschlüsselungsmethoden wie RSA (Rivest-Shamir-Adleman) und ECC (Elliptic Curve Cryptography) basieren auf mathematischen Problemen wie der Faktorisierung großer Zahlen und der Berechnung diskreter Logarithmen. Diese Probleme sind für klassische Computer schwer zu lösen, was die Sicherheit der Verschlüsselung gewährleistet. Mit Algorithmen wie Shors Algorithmus können Quantencomputer diese Probleme jedoch effizient lösen, was bedeutet, dass sie die derzeitigen Verschlüsselungsmethoden brechen könnten. Quantensichere Algorithmen basieren auf mathematischen Problemen, die auch für Quantencomputer schwer zu lösen sind. Beispiele hierfür sind: Gitterbasierte Kryptographie (z.B. Learning with Errors - LWE), Code-basierte Kryptographie (z.B. McEliece-Kryptosystem), Hash-basierte Signaturen (z.B. Lamport-Signaturen), Multivariat-polynomiale Kryptographie, Isogenie-basierte Kryptographie, etc. Die Sicherheitsstufe dieser Algorithmen wird so bewertet, dass sie auch gegenüber einem zukünftigen, leistungsfähigen Quantencomputer standhalten können.

Organisationen wie das National Institute of Standards and Technology (NIST) arbeiten an der Standardisierung quantensicherer Algorithmen, um deren breite Anwendung in der Praxis zu fördern. Beispiele für quantensichere Verschlüsselungsalgorithmen, die in Ausführungsbeispielen zum Einsatz kommen können, sind Lattice-based Cryptography, Learning with Errors (LWE) und Ring-Learning with Errors (Ring-LWE), Code-based Cryptography, z.B. das McEliece-Kryptosystem verwendet lineare Fehlerkorrekturcodes und gilt als robust gegenüber Quantenangriffen. Ein weiteres Beispiel sind Hash-based Signatures, beispielsweise Lamport-Signaturen und deren Varianten sind einfache, aber sichere Methoden zur Erstellung digitaler Signaturen, die auch gegen Quantenangriffe sicher sind.

Die Kombination mit einer quantensicheren kryptographischen Methode, z.B. der Post Quantum Kryptographie, wäre anzuraten. In diesem Fall schützt

- die PLS die Kommunikationsstrecke über Rauschen auf dem physikalischen Kanal, d.h. ein Angreifer empfinge in den meisten Fällen ausschließlich Rauschen und keine Information. In den selteneren Fällen, wie bei einer möglichen Annäherung an den Sender, schützt zusätzlich
- die kryptographische Verschlüsselung des Kanals. Wenn der Angreifer trotz des PLS-Codes seinen Kanal soweit verbessern kann, dass der Schutz versagt, so griffe in diesem Fall der zusätzliche Schutz der Kryptographie.

Angriff mit einem Empfänger auf dem Boden:
In diesem Szenario soll die Richtfunkstrecke mit einer großen Antenne, die sich auf dem Boden befindet, angegriffen werden. Die Antenne wird dabei mit einer Haube verdeckt, so dass der Angriff möglichst unentdeckt bleibt. Die Angreifer Antenne zielt dabei direkt auf den Sender.

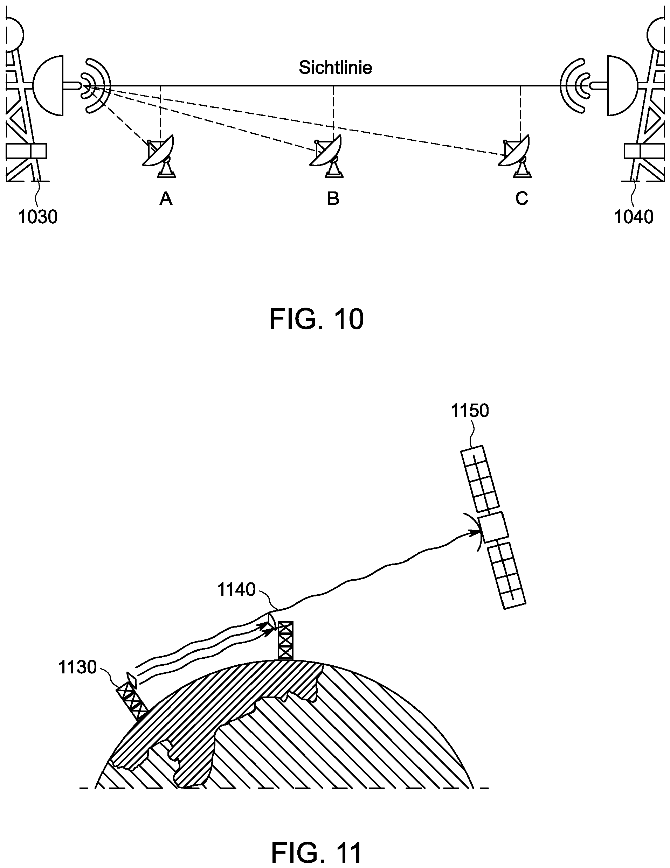

Fig. 10 zeigt eine Illustration von verschiedenen Positionen eines Angreifers an einer Richtfunkstrecke. Fig. 10 zeigt links den Sender 1030 und rechts den Empfänger 1040. Dazwischen sind drei potenzielle Angriffspositionen A, B, C markiert. Die Positionen A, B und C weisen eine unterschiedliche Parallaxe zur direkten Sichtverbindung aus. Diese Parallaxe erzeugt einen schlechteren Gain der Sendeantenne hinsichtlich der Angreifer im Vergleich zum legitimen Empfänger. Die Verschlechterung des Gains lässt sich entsprechend er Vorgaben ITU-R BO. 1213 and ITU-R BO. 1900 mit einem Internetwerkzeug https://de.wikipedia.org/wiki/Richtfunk (Abbildung 1) berechnen. Für das betrachtete Beispiel einer Richtfunkverbindung mit 10GHz Frequenz, 5km Distanz, 30m Höhe und 3m Durchmesser der Senderantenne ergibt sich

| Angreifer | Abstand [m] | Parallaxe [°] | Gainverlust Sender [dB] |
|---|---|---|---|
| A | 100 | 16,7 | -50 |
| B | 2500 | 0,68 | -11,58 |
| C | 5000 | 0,34 | -2,9 |

Der Gainverlust wird mit steigender Größe des Senders größer, daher ist die Verwendung großer Sendeantennen sinnvoll.

Da der Angreifer nun einen reduzierten Gain der Sendeantenne erfährt, muss nun auch die Bedingung für sichere PLS-Kodierung erweitert werden. Es gilt nun

$$L_{GT}^A - L_{GT}^E + L_{GR} - L_{GA} + L_A - L <! 0$$

wobei $L_{GT}^A$ der Gain der Senderantenne ist, den ein Angreifer sieht und $L_{GT}^E$ den Gain der Sendeantenne, den der legitime Empfänger sieht, beschreibt.

In dem betrachteten Beispiel ergeben sich die folgenden Sicherheitskriterien:

Angreifer A:

$$50dB + L_{GR} - L_{GA} - 48dB <! 0$$

Der Angreifer A müsste einen Horchposten mit einer ca. 4m Durchmesser großen Antenne ca. 100m vor dem Sender aufbauen. Unwahrscheinlich, dass dieser Angriff unbeobachtet bleibt.

Angreifer B:

$$11{,}25dB + L_{GR} - L_{GA} - 19dB <\;! \, 0$$

Der Angreifer B müsste also eine Antenne mit 8dB größerem Gain, also die legitime Empfangsantenne aufbauen. Dies wäre eine Antenne von min. 8m Durchmesser. Es ist ebenfalls unwahrscheinlich, dass dieser Angriff unentdeckt bliebe.

Angreifer C:

$$3dB + L_{GR} - L_{GA} <\;! \, 0$$

Der Angreifer C müsste also eine Antenne mit einem 3dB größeren Gain unterhalb des legitimen Empfängers aufbauen. Dies wäre eine Antenne von min. 4,2m Durchmesser. Auch in diesem Fall wäre ein unentdecktes Abhören relativ unwahrscheinlich.

Angriff mit einem Satelliten hinter dem Empfänger:

Dieser Angriff geht von einem Satelliten aus, der die Funksignale der Richtfunkstrecke im Horizont abgreift. Der Satellit fliegt dabei in einer Höhe von 400km am Horizont.

Fig. 11 zeigt eine Abhörsituation mit einem Satelliten und illustriert die Geometrie des Aufbaus. Der Sender 1130 befindet sich links und sendet nach rechts zum Empfänger 1140 über die Richtfunkstrecke. Der Satellit 1150 befindet sich hinter dem Empfänger 1140 in der Verlängerung der Richtfunkstrecke. Der LEO-Satellit 1150 (Low Earth Orbit, Flughöhe 400-500km) greift das Signal einer Richtfunkstrecke ab. Die Distanz vom Sender 1130 der Richtfunkstrecke zum LEO-Satelliten 1150, der sich in 400km Höhe über der Erde befindet, beträgt ungefähr 2000km. Es ergibt sich ein Pfadverlust von:

Gain der Satellitenantenne bei 1m Durchmesser: 38dB
Gain der Sendeantenne bei 3m Durchmesser: 48dB
Distanz Sender- Satellit: 2050km
Freiraumdämpfung: 178,7 dB
Atmosphäre: ca. 10 dB (angenommen: 1000km)
Starkregen: 25 dB
Sicherheitsreserve: 20 dB
Summe der Pfadverluste: L = 233 dB

Bei einem Nachteil des Empfänger-Antennen-Gains von 10dB.

Somit hat ein Spionagesatellit ein deutlich schlechteres Signal als der legitime Empfänger. Auch die geringere Temperatur im Weltraum kann mit seinem Anteil bei $T_{Sys}$ diesen Nachteil bei Weitem nicht kompensieren. PLS schützt daher gegen Angriffe auf eine Richtfunkstrecke mit Hilfe von Satelliten am Horizont.

Angriffe über Streustrahlung, Reflexionen an der Ionosphäre, Wettereinfluss:

Signale, die durch Streuung, Reflexion oder Wettereinflüsse aus einer Richtfunkstrecke verloren gehen, haben bei Empfängern einen sehr niedrigen Pegel und somit ein sehr niedriges Signal-zu-Rausch Verhältnis. PLS schützt vor allem gegen das unbefugte Erlangen von Information bedingt durch diese Effekte.

Aufbau / weitere Ausführungsbeispiele:

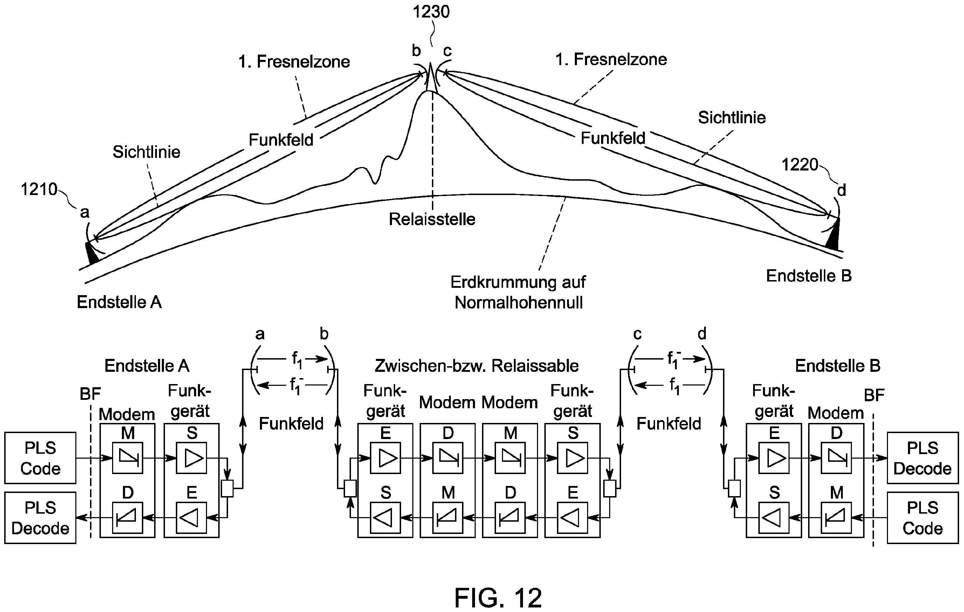

Fig. 12 zeigt eine Struktur einer Richtfunkverbindung mit Relaisstation in einem Ausführungsbeispiel. Fig. 12 zeigt dabei eine erste Endstelle A 1210 die mit einer zweiten Endstelle B 1220 über eine bidirektionale Richtfunkverbindung und über die Relaisstelle 1230 kommuniziert. Alle drei Stellen 1210, 1220 und 1230 umfassen demnach Sender und Empfänger, um die bidirektionale Kommunikation und die Weiterleitung zu ermöglichen. Insbesondere die Relaisstelle 1230 umfasst eine Vorrichtung, die ausgebildet ist, um eine empfangene Nachricht von einer ersten Richtfunkstrecke (von Endstelle A 1210 zu Relaisstelle 1230) über eine zweite Richtfunkstrecke (von Relaisstelle 1230 zu Endstelle B 1220) weiterzuleiten und/oder umgekehrt. Die Struktur einer Richtfunkverbindung (oben in Fig. 12) ist analog zu Fig. 5. Die Fig. 12 illustriert unten den Aufbau der jeweiligen Sendeempfänger mit Modulatoren "M", denen Sendeteile "S" folgen und Empfangsteilen "E" denen Demodulatoren "D" folgen.

Fig. 12 zeigt einen technischen Aufbau für eine Richtfunkstrecke. Oben wird das Funknetz gezeigt, unten die technische Realisierung. "Im Modulator M wird der zu übertragende, digitale Datenstrom einem Zwischenfrequenzträger aufgeprägt. Als Modulationsverfahren werden Quadratur-Amplitudenmodulationsverfahren mit 4 bis 2048 Stufen (4QAM bis 2048QAM) verwendet. In der Sendebaugruppe S wird der Zwischenfrequenzträger in die Radiofrequenzebene umgesetzt und sein Leistungspegel auf den Sendepegel angehoben. Die üblichen Sendepegel von Richtfunksystemen liegen zwischen 20 dBm (= 100 mW) und 30 dBm (= 1 W). Über eine Sende-Empfang-Weiche wird der Radiofrequenzträger der Antenne zugeführt und in Richtung der Gegenstelle abgestrahlt. Dort gelangt der Träger zum Empfänger E, der das Empfangssignal verstärkt und in die Zwischenfrequenzebene zurücksetzt. Im Demodulator wird der Zwischenfrequenzträger schließlich demoduliert und das dabei wiedergewonnene Datensignal regeneriert.", vgl. https://de. wikipedia.org/wiki/Richtfunk (Abbildung 1).

Die neuen PLS-Komponenten sind in der Fig. 12 ebenfalls eingezeichnet. Die PLS-Koder sind jeweils in den Sendepfaden und die PLS-Dekoder sind in den Empfangspfaden angeordnet. In dem gezeigten Aufbau findet eine PLS-Kodierung-Dekodierung nur in den Endstellen A, B 1210, 1220 statt. Vorliegen wird also ein PLS-Code über die ganze Strecke angewendet, die PLS-Kodierung findet quasi Ende-zu-Ende statt. Die Vorrichtung in der Relaisstation 1230 ist demnach ausgebildet, um die Nachricht weiterzuleiten, ohne die zusätzlichen Rauschanteile in der Nachricht zu verändern. Die entspricht einem Amplify-and-Forward Szenario und begünstigt niedrige Latenzen.

In anderen Ausführungsbeispielen kann die Vorrichtung auch ausgebildet sein, um in der Nachricht vor dem Weiterleiten vorherige zusätzliche Rauschanteile zu entfernen und neue zusätzliche Rauschanteile einzufügen. Dann findet in der Relaisstation eine Dekodierung mit anschließender Rekodierung statt. Dies entspricht einem Recode-and-Forward Szenario und die Teilstrecken können so separat abgesichert werden.

In diesem Ausführungsbeispiel wird eine zusätzliche Komponente, die mit "PLS-Code" und "PLS-Decode" bezeichnet wird, am Sender und Empfänger hinzugefügt. Die "PLS-Code" Komponente transformiert die zu sendenden Nachrichten in eine PLS-gesicherte Nachricht währen die "PLS-Decode" Komponente die kodierte Nachricht zu einer lesbaren Nachricht transformiert. "PLS-Code" und "PLS-Decode" Komponente müssen dazu einen Satz gemeinsamer Zufallszahlen teilen. Der geteilte Zufall darf dabei öffentlich zugänglich sein. Entweder werden die Zufallszahlen über das Backbone Netzwerk an die Endpunkte der Richtfunkstrecke provisioniert, oder sie werden durch eine Auswertung des Rauschens auf dem physikalischen Kanal gewonnen. Alternativ kann der Zufall über eine Satellitenverbindung oder über das Richtfunknetzwerk vermittelt werden.

Eine quantensichere Verschlüsselung wird zusätzlich angeraten, um auch Fälle abzusichern, bei den die PLS in Randbereiche vordringt.

Spezielle Use Cases (Anwendungsfälle):

1. Schlüsselaustausch Key Exchange:
Kryptographische Schlüssel lassen sich gezielt mit einer PLS/PQC Sicherung vom Sender zum Empfänger der Richtfunkstrecke übertragen. Dazu wird der kryptographische Schlüssel mit dem PLS-Code versehen und transmittiert. Die Schlüsselbits können parallel zu dem normalen Datenstrom maximal PLS kodiert werden, unter der Annahme, dass ein Angreifer fast denselben SNR erlangen kann, wie der legitime Empfänger. Zusätzlich können die Schlüsselbits (PQC)-kryptographisch gesichert werden. Die Kodierung der Schlüsselbits kann dabei einen besseren PLS-Code verwenden, als die normalen Datenverkehre.

2. On/Off/Dynamik: PLS Security lässt sich dynamisch an- und abschalten. Auch lässt sich der Code dynamisch, je nach Situation/Umgebung ändern (Anpassen/Einstellen der Vorschrift zum Einfügen der zusätzlichen Rauschanteile). Bei schlechtem Wetter oder spezieller Gefahrenlage können die Code Parameter verändert werden.

3. Resilienz: Durch dynamische Änderungen des PLS-Sicherheitscodes lassen sich Angreifer aus dem Netzwerklink treiben. Sollte ein Angreifer in der Lage sein, einen Netzwerklink zu belauschen, weil dieser nicht die richtige Code Konfiguration hatte, so kann dieser durch einen dynamischen Wechsel des PLS-Codes, z.B. durch eine einfache Codeverlängerung, aus dem Link gedrängt werden. Der Angreifer empfängt dann nur noch weißes Rauschen.

Folgende Mechanismen können zur Feststellung, ob der Kanal angegriffen wird, herangezogen werden:

• Abrupter Abfall der empfangenen Leistung beim Empfänger durch partielle Abschattung durch einen Angreifer. Währenddessen bleibt der andere Richtfunkkanal (Rückrichtung) unbehelligt. Anmerkung: es werden normalerweise zwei Kanäle für bidirektionalen Verkehr verwendet. In Ausführungsbeispiele kann das Verfahren 10 und/oder auch das Verfahren 20 ein Überwachen der Empfangsleistung umfassen. Charakteristische Schwankungen in der Empfangsleistung können dann als Indikator für einen Abhörversuch dienen. Einige charakteristische Leistungsschwankungen werden im Folgenden dargestellt.

• Variierende Leistungsschwankungen unterhalb eines Grenzgröße, z.B. durch eine Drohne, die ihre Position aufgrund von Witterungseinflüssen nicht stabil halten kann und innerhalb der Fresnelzone schwankt.

- Einsatz von maschinellem Lernen (beispielsweise basierend auf der Signalleistung) zur Erkennung von Angriffen. Dabei können Trainingsdaten durch gestellte Angriffe erzeugt werden. Die Verfahren 10 und/oder 20 können dann entsprechend trainierte künstliche Intelligenz nutzen, um charakteristische Signal- und/oder Leistungsschwankungen zu detektieren.
- Luftraumüberwachung/Satellitenüberwachung schlägt an.
- Jamming Detection, d.h. elektromagnetische Störstrahlung wird über einen spektralen Analysator aufgenommen und analysiert. Typische Störungen in Frequenzband können so identifiziert werden und ein aktiver Angriff ausgeschlossen werden.
- Ein IR-Laser/eine Kamera kann parallel zum Richtfunk angebracht werden, um die Sichtverbindung zu prüfen (LoS Überprüfung) und Objekte in der Sichtlinie detektieren.
- Mehrere Richtfunkkanäle oder auch höhere harmonische Frequenzen können ausgenutzt werden, um Objekte zu erkennen. Höhere Frequenzen werden durch Objekte mehr gedämpft als niedrige Frequenzen. Sollte das Richtfunksystem also auf zwei Frequenzen arbeiten, so könnte ein solcher Effekt ausgenutzt werden.

Mögliche Gegenmaßnahmen, die in Ausführungsbeispielen ergriffen werden können, sind:

- Variation der Einstellungen der Richtfunkstrecke (Übertragungsparameter, z.B. Frequenz, Modulationsverfahren → Sicherheits Fallback Modus, nach Detektion wird in eine Konfiguration gewechselt, die wesentlich sicherer ist).
- Privater Seed (Zufallswert/Zufallszahl) der in regelmäßigen Abständen vorverteilt werden könnte bzw. in einem nicht-kompromittierten Fall ausgetauscht und gespeichert werden könnte.
- Umschalten auf PQC mit Schlüssel, der in "Ruhephasen" des Systems generiert/ausgetauscht wurde.

Ermittlung einer zusätzlichen Zufallszahl in Abhängigkeit von der Freiluftdämpfung zwischen legitimen Sender und Empfänger + Vermischung mit dem öffentlichen Seed.

Zumindest manche Ausführungsbeispiele erzeugen demnach die folgenden Aspekte bzw. nutzen folgende Effekte:

- ◦ PLS ist informationstheoretisch sicher, sofern das SNR eines Angreifers schlechter ist als das eines rechtmäßigen Empfängers.
- ◦ PLS kann die kryptographische Verschlüsselung der Nachrichten durch einen unabhängigen Sicherheitsvektor ergänzen. PLS und Kryptographie schützen einen Kommunikationskanal auf unterschiedlichen Arten und Ergänzen sich somit.
- ◦ Eine Ende-zu-Ende Absicherung kann bereitgestellt werden.
- ◦ Eine Entropieverteilung ist über klassische Netzwerke möglich (geheim, verschlüsselt oder offen) zur Verteilung des Seeds. Der Seed darf, muss aber nicht öffentlich sein. Geheimer Seed ist besser als öffentlicher Seed.
- ◦ Resilientes Sicherheitsverfahren, was durch dynamische Anpassung des Seeds bzw. der Seed Längen beim Code ausgenutzt werden kann.
- ◦ Zumindest einige Ausführungsbeispiele lassen sich effektiv implementieren und bieten so günstige Lösungen.
- ◦ Integrierbar in bestehende Richtfunkarchitekturen und -systeme.
- ◦ Schützt Richtfunk vor Informationsverlusten durch Streuung, Beugung, oder atmosphärischen Einflüssen. Schützt vor Angreifern, die sich dem rechtmäßigen Empfänger transversal bzw. longitudinal nähern. Schütz vor Aufklärung der Richtfunkstrecken durch Angriffe der Geheimdienste.
- ◦ Pfaddiversifizierung über verschiedene Pfade, d.h. doppelte Richtfunkverbindung, schützt auch gegen Drohnenangriffe.
- ◦ Eine quantensichere Verteilung kryptographischer Schlüssel wird ermöglicht.
- ◦ Ergänzt sich mit quantensicherer Kryptographie zur Schaffung abhörsicherer Leitungen, die mit zwei komplementären Technologien gesichert werden.

Weitere Details finden sich in

- https://www.dfmg.de/de/unsere-leistungen/richtfunkanbindungen.html
- https://community.openstreetmap.org/t/richtfunkstrecken/67743
- https://www.pandacomdirekt.de/fileadmin/user_upload/Downloads/Richtfunk/Richtfunk-Broschuere.pdf
- https://www.golem.de/news/mobilfunk-deutsche-telekom-betreibt-noch-9-000-richtfunkstre-ckcn-1706-128609.html
- https://www.dfmg.de/de/unsere-leistungen/richtfunkanbindungen.html#:~:text=550%20großen%20Femmeldetürmen%2C%20die%20flächendeckend,Vemetzung%20-%20auch (%20über%20Ländergrenzen%20hinaus.
- https://de.wikipedia.org/wiki/Fresnelzone

- https://de.wikipedia.org/wiki/Richtfunk, Sektion Überwachung und Spionage
- https://www.pandacomdirekt.de/unsere-produkte/detail/verschluesselung.html
- Luis Torres-Figueroa, "Implementation of Physical Layer Security into 5G NR Systems and E2E Latency Assessment", GlobeCom 2022, Rio de Janeiro.
- http://www.guetter-web.de/education/npnt/npnt_4.pdf
- https://de.wikipedia.org/wiki/Freiraumdämpfung
- http://www.rcru.rl.ac.uk/show.php?page=njt/ITU/ITU676-6
- Alain Delrieu, Meeting for World Radio Communication 2007, Bangkok
- https://www.everythingrf.com/rf-calculators/parabolic-reflector-antenna-gain
- https://www.security-insider.de/drohnenabwehr-mit-laser-richtfunk-und-netz-a-616327/
- https://de.wikipedia.org/wiki/Richtfunk (Abbildung 1)

Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

**Patentansprüche**

1. Ein Verfahren (10) für einen Sender (300) und zur Sicherung einer Richtfunkverbindung zwischen dem Sender (300) und einem Empfänger (400) in einem Richtfunksystem (500), mit Ausrichten (11) eines Richtfunkantennenstrahls, sodass der Empfänger (400) in einer Hauptabstrahlrichtung des Antennenstrahls liegt;

Einfügen (12), auf der physikalischen Schicht, von zusätzlichen Rauschanteilen in eine Nachricht für den Empfänger (400), um eine geschützte Nachricht für den Empfänger (400) zu erhalten, und
Senden (13) der geschützten Nachricht an den Empfänger (400) über den Antennenstrahl.

2. Das Verfahren (10) gemäß Anspruch 1, ferner umfassend Anpassen einer Übertragungsqualität durch Einstellen eines oder mehrerer Übertragungsparameter für das Senden der geschützten Nachricht und/oder Einstellen einer Vorschrift für das Einfügen der Rauschanteile, basierend auf der Übertragungsqualität und basierend auf einem zur Absicherung der Funkverbindung notwendigen Signalqualitätsunterschied für einen Abhörer relativ zu einer Signalqualität beim legitimen Empfänger (400), und/oder
basierend auf der Übertragungsqualität und basierend auf einem geschätzten Signalqualitätsunterschied für einen Abhörer relativ zu einer Signalqualität beim legitimen Empfänger (400), um die Nachricht vor einem Abhören zu sichern.

3. Das Verfahren (10) gemäß einem der Ansprüche 1 oder 2, wobei das Einfügen der zusätzlichen Rauschanteile auf einer oder mehreren Zufallszahlen basiert, die dem Sender (300) und dem Empfänger (400) bekannt sind.

4. Das Verfahren (10) gemäß Anspruch 3, wobei die ein oder mehreren Zufallszahlen ein gemeinsames Geheimnis des Senders (300) und des Empfängers (400) sind oder wobei die ein oder mehreren Zufallszahlen öffentlich bekannt sind.

5. Das Verfahren (10) gemäß einem der Ansprüche 3 oder 4, ferner umfassend Erzeugen eines Sicherheitscodes basierend auf den ein oder mehreren Zufallszahlen und Einfügen der Rauschanteile basierend auf dem Sicherheitscode.

6. Das Verfahren (10) gemäß einem der Ansprüche 1 bis 5, ferner umfassend Überwachen der Richtfunkverbindung auf Signalveränderungen oder Veränderungen im Luftraum der Richtfunkverbindung, die auf einen Abhörversuch hinweisen und Anpassen des Einfügens von Rauschanteilen, wenn Hinweise auf einen Abhörversuch vorliegen und/oder Anpassen von Übertragungsparametern, wenn Hinweise auf einen Abhörversuch vorliegen.

7. Das Verfahren (10) gemäß einem der Ansprüche 1 bis 6 ferner umfassend dynamisches Variieren des Einfügens von zusätzlichen Rauschanteilen zum Schutz vor etwaigem Abhören der Richtfunkverbindung und/oder zur Erhöhung der Systemresilienz, wobei das dynamische Variieren ein dynamisches Verändern eines Anteils der Rauschanteile in der geschützten Nachricht umfasst.

8. Das Verfahren (10) gemäß einem der Ansprüche 1 bis 7, ferner umfassend zusätzliches Verschlüsseln der Nachricht mit einem post-quantum-kryptografischen Verschlüsselungsalgorithmus und/oder wobei das Einfügen der zusätzlichen Rauschanteile auch wetterabhängig erfolgt.

9. Ein Verfahren (20) für einen Empfänger (400) und zur Sicherung einer Richtfunkverbindung zwischen einem Sender (300) und dem Empfänger (400) in einem Richtfunksystem (500), mit Ausrichten (21) eines Richtfunkantennenstrahls, sodass der Sender (300) in einer Hauptabstrahlrichtung des Antennenstrahls liegt;

Empfangen (22) einer geschützten Nachricht über den ausgerichteten Antennenstrahl;
Entfernen (23), auf der physikalischen Schicht, von zusätzlichen Rauschanteilen aus der geschützten Nachricht, um eine rauschreduzierte Nachricht zu erhalten; und
Dekodieren (24) der rauschreduzierten Nachricht.

10. Das Verfahren (20) gemäß Anspruch 9, wobei das Entfernen der zusätzlichen Rauschanteile auf einer oder mehreren Zufallszahlen basiert, die dem Sender (300) und dem Empfänger (400) bekannt sind.

11. Ein Computerprogramm mit einem Programmcode zur Durchführung eines der Verfahren (10; 20) gemäß einem der Ansprüche 1 bis 10, wenn der Programmcode auf einem Computer, einem Prozessor oder einer programmierbaren Hardwarekomponente ausgeführt wird.

12. Eine Vorrichtung (30) für einen Sender (300) und zur Sicherung einer Richtfunkverbindung zwischen dem Sender (300) und einem Empfänger (400) in einem Richtfunksystem (500), mit ein oder mehreren Schnittstellen (32), die zur Kommunikation in dem Richtfunksystem (500) ausgebildet sind; und
ein oder mehreren Signalverarbeitungskomponenten (34), die ausgebildet sind, um eines der Verfahren (10) gemäß einem der Ansprüche 1 bis 8 auszuführen.

13. Eine Vorrichtung (40) für einen Empfänger (400) und zur Sicherung einer Richtfunkverbindung zwischen einem Sender (300) und dem Empfänger (400) in einem Richtfunksystem (500), mit

ein oder mehreren Schnittstellen (42), die zur Kommunikation in dem Richtfunksystem (500) ausgebildet sind; und
ein oder mehreren Signalverarbeitungskomponenten (44), die ausgebildet sind, um eines der Verfahren (20) gemäß einem der Ansprüche 9 oder 10auszuführen.

14. Eine Vorrichtung für eine Relaisstation (1230) eines Richtfunksystems mit einer Vorrichtung (30) gemäß Anspruch 12 und einer Vorrichtung (40) gemäß Anspruch 13.

15. Die Vorrichtung gemäß Anspruch 14, die ausgebildet ist, um eine empfangene Nachricht von einer ersten Richtfunkstrecke über eine zweite Richtfunkstrecke weiterzuleiten und/oder umgekehrt, wobei die Vorrichtung ferner ausgebildet ist, um in der Nachricht vor dem Weiterleiten vorherige zusätzliche Rauschanteile zu entfernen und neue zusätzliche Rauschanteile einzufügen, oder um die Nachricht weiterzuleiten, ohne die zusätzlichen Rauschanteile in der Nachricht zu verändern.

Ausrichten eines Richtfunkantennenstrahls, sodass der Empfänger in einer Hauptabstrahlrichtung des Antennenstrahls liegt

11

Einfügen, auf der physikalischen Schicht, von zusätzlichen Rauschanteilen in eine Nachricht für den Empfänger, um eine geschützte Nachricht für den Empfänger zu erhalten

12

Senden der geschützten Nachricht an den Empfänger über den Antennenstrahl

13

10

# FIG. 1

Ausrichten eines Richtfunkantennenstrahls, sodass der Sender in einer Hauptabstrahlrichtung des Antennenstrahls liegt

21

Empfangen einer geschützten Nachricht über den ausgerichteten Antennenstrahl

22

Entfernen, auf der physikalischen Schicht, von zusätzlichen Rauschanteilen aus der geschützten Nachricht, um eine rauschreduzierte Nachricht zu erhalten

23

Dekodieren der rauschreduzierten Nachricht.

24

<u>20</u>

# FIG. 2

FIG. 3

FIG. 4 | FIG. 4-1 |
         | FIG. 4-2 |

FIG. 4-1

• Mast, Backbone
○ Zu versorgender Ort
◉ Mast, passive Umlenkung
◉ HVT
――――― Hauptkabel
――――― Funkstrecke
― ― ― Optionale Funkstrecke

FIG. 4-2

Fresnel Radius R

Strecke D

530

540

FIG. 5

Message → PLS Coder → Tx → Rx → PLS Decoder → Message

602    604    606    608

Eve Rx → Noise

610

FIG. 6

FIG. 7

FIG. 8

FIG. 9

**FIG. 10**

**FIG. 11**

**FIG. 12**

Europäisches Patentamt
European Patent Office
Office européen des brevets

# EUROPÄISCHER RECHERCHENBERICHT

Nummer der Anmeldung

EP 24 18 2999

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHEN XIAOMING ET AL: "A Survey on Multiple-Antenna Techniques for Physical Layer Security", IEEE COMMUNICATIONS SURVEYS & TUTORIALS, Bd. 19, Nr. 2, 29. November 2016 (2016-11-29), Seiten 1027-1053, XP011651829, DOI: 10.1109/COMST.2016.2633387 [gefunden am 2017-06-02] * Seite 1029 - Seite 1042 * * Abbildungen 2,4,5 *<br>----- | 1-15 | INV.<br>H04W12/033<br>H04W12/122<br>H04B7/06 |
| X | LU LV ET AL: "Safeguarding Next Generation Multiple Access Using Physical Layer Security Techniques: A Tutorial", ARXIV.ORG, CORNELL UNIVERSITY LIBRARY, 201 OLIN LIBRARY CORNELL UNIVERSITY ITHACA, NY 14853, 18. Mai 2024 (2024-05-18), XP091760645, * Seite 8 - Seite 20 *<br>----- | 1-15 | |
| A | MAJID H KHOSHAFA ET AL: "RIS-Assisted Physical Layer Security in Emerging RF and Optical Wireless Communication Systems: A Comprehensive Survey", ARXIV.ORG, CORNELL UNIVERSITY LIBRARY, 201 OLIN LIBRARY CORNELL UNIVERSITY ITHACA, NY 14853, 15. März 2024 (2024-03-15), XP091701306, * Seite 8 - Seite 15 *<br>----- | 1-15 | RECHERCHIERTE SACHGEBIETE (IPC)<br><br>H04W<br>H04B |

Der vorliegende Recherchenbericht wurde für alle Patentansprüche erstellt

| Recherchenort | Abschlußdatum der Recherche | Prüfer |
|---|---|---|
| München | 19. November 2024 | Kraska, Nora |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 22209986 A
- EP 23196965 A

- EP 24174614 A

**In der Beschreibung aufgeführte Nicht-Patentliteratur**

- **LUIS TORRES-FIGUEROA**. Implementation of Physical Layer Security into 5G NR Systems and E2E Latency Assessment. *GlobeCom*, 2022